# EUROPEAN PATENT APPLICATION

(11) **EP 4 693 259 A1**
(43) Date of publication of application: **11.02.2026**
(21) Application number: 24848244.0
(22) Date of filing: 29.07.2024
(51) Int. Cl.: G09F 9/30, F16C 11/12, H04M 1/02

(54) **FOLDABLE ELECTRONIC DEVICE AND SCREEN ASSEMBLY**

(30) Priority: 31.07.2023 CN 202310961668
(71) Applicant: Huawei Technologies Co., Ltd., Shenzhen, Guangdong 518129 (CN)
(72) Inventor: MAO, Weihua, Shenzhen, Guangdong 518129 (CN); YU, Weidong, Shenzhen, Guangdong 518129 (CN); LV, Ren, Shenzhen, Guangdong 518129 (CN); WU, Bo, Shenzhen, Guangdong 518129 (CN)
(74) Representative: Gill Jennings & Every LLP
(86) International application number: PCT/CN2024/108300
(87) International publication number: WO 2025/026289

(57) **Abstract**

This application provides a foldable electronic device and a screen assembly. The electronic device includes a screen, a hinge assembly, a first housing, a second housing, and an elastic component. A material of an elastic portion of the elastic component is an elastic material or a non-Newtonian fluid material. A material of a support portion of the elastic component is a rigid material. The electronic device has an unfolded state and a folded state. When the electronic device is in the unfolded state, the elastic component is unfolded. The screen, the elastic component, and the hinge assembly are stacked in a thickness direction of the electronic device. The elastic portion and the support portion are stacked in the thickness direction of the electronic device. A first portion of the elastic component laps over a first connection portion of the hinge assembly, and a second portion laps over a second connection portion of the hinge assembly. When the electronic device is in the folded state, the elastic component is bent, the first portion of the elastic component laps over the first connection portion, and the second portion laps over the second connection portion. The electronic device has high screen drop reliability and a small rebound force.

## Description

This application claims priority to Chinese Patent Application No. 202310961668.1, filed with the China National Intellectual Property Administration on July 31, 2023, and entitled "FOLDABLE ELECTRONIC DEVICE AND SCREEN ASSEMBLY", which is incorporated herein by reference in its entirety.

### TECHNICAL FIELD

This application relates to the field of foldable electronic products, and in particular, to a foldable electronic device and a screen assembly.

### BACKGROUND

With continuous development of flexible display technologies, the flexible display technologies are widely used in various foldable electronic devices. An electronic device with an outward foldable screen is favored by users because of convenience in use. However, regardless of whether the electronic device with the outward foldable screen is in an unfolded state or a folded state, the screen is exposed to an external environment. This greatly increases a probability of screen damage when the electronic device drops.

In a conventional electronic device with an outward foldable screen, drop reliability of the screen is usually improved by compromising a thickness of the screen. However, increasing the thickness of the screen improves the drop reliability of the screen, and also greatly increases a rebound force of the screen during bending. This results in poor unfolding and folding experience of the electronic device. Therefore, how to obtain an electronic device that has high screen drop reliability and a small rebound force becomes a current focus.

### SUMMARY

An implementation of this application provides a foldable electronic device, to provide a foldable electronic device and a screen assembly that have high screen drop reliability and a small rebound force.

According to a first aspect, a foldable electronic device is provided. The electronic device includes a screen, a hinge assembly, a first housing, a second housing, and an elastic component. The screen is fastened to the first housing and the second housing. The hinge assembly includes a first connection portion, a second connection portion, and a main shaft portion. The main shaft portion is connected to the first connection portion and the second connection portion. The first connection portion is connected to the first housing. The second connection portion is connected to the second housing. The elastic component includes an elastic portion and a support portion. A material of the elastic portion is an elastic material or a non-Newtonian fluid material. A material of the support portion is a rigid material. The electronic device has an unfolded state and a folded state. When the electronic device is in the unfolded state, the elastic component is unfolded. The screen, the elastic component, and the hinge assembly are stacked in a thickness direction of the electronic device. The elastic portion and the support portion are stacked in the thickness direction of the electronic device. A first portion of the elastic component laps over the first connection portion, and a second portion of the elastic component laps over the second connection portion. When the electronic device is in the folded state, the elastic component is bent, the first portion of the elastic component laps over the first connection portion, and the second portion of the elastic component laps over the second connection portion.

It may be understood that, compared with a conventional electronic device that compromises a thickness of a screen to improve overall structural reliability of the screen, resulting in a high overall thickness of the electronic device and a large rebound force during bending, the electronic device in this implementation is provided with an elastic component between the screen and the main shaft portion of the hinge assembly. The elastic component may include the support portion and the elastic portion. The material of the support portion may be the rigid material, and the material of the elastic portion may be the elastic material or the non-Newtonian fluid material. When the electronic device is in the unfolded state, the screen, the elastic component, and the hinge assembly are stacked in the thickness direction of the electronic device. In this way, when the electronic device drops, the support portion of the elastic component can well absorb an impact force and/or a squeezing force of the hinge assembly on the screen, reduce the impact force on the screen, and provide good rigid support for the screen. The elastic portion of the elastic component can have a good elastic effect on the impact force and/or the squeezing force on the screen, and the elastic portion can also absorb and disperse the impact force and/or the squeezing force on the screen. The elastic component can effectively absorb the impact force on the screen from falling, and avoid a problem that the screen generates a bright spot and a black spot due to a strong collision between the screen and the hinge assembly. This helps improve structural reliability of the screen and prolong a service life of the screen. In other words, drop reliability of the screen in this implementation can be effectively improved through the elastic component located between the screen and the hinge assembly without compromising the thickness of the screen. In addition, an overall thickness of the screen is low, so that a rebound force of the electronic device during bending can be effectively reduced, to help improve unfolding and folding experience of a user.

In a possible implementation, the support portion includes a first support member. The elastic portion includes a first elastic member. The first support member is fastened to the main shaft portion of the hinge assembly. The first elastic member is fastened to a surface that is of the first support member and that faces away from the main shaft portion. The first support member includes a first portion, a second portion, and a third portion. The second portion is connected between the first portion and the third portion. The second portion is fastened to the main shaft portion. When the electronic device is in the unfolded state, the first portion laps over the first connection portion and is movable relative to the first connection portion. The second portion and the first portion are unfolded relative to each other, and the third portion laps over the second connection portion and is movable relative to the second connection portion.

It may be understood that the support portion of the elastic component in this implementation may include at least one support member (namely, the first support member in this implementation). The elastic portion of the elastic component may include at least one elastic member (namely, the first elastic member in this implementation). A material of the first support member may be a rigid material, and a material of the first elastic member may be an elastic material or a non-Newtonian fluid material. In this way, when the electronic device drops and a second portion of the screen is impacted, the first support member can well absorb an impact force and/or a squeezing force of the hinge assembly on the second portion of the screen, reduce the impact force on the screen, and provide good rigid support for the screen. The first elastic member can have a good elastic effect on the impact force and/or the squeezing force on the screen, and can absorb and disperse the impact force and/or the squeezing force on the screen. In other words, the elastic component in this implementation includes both the first support member and the first elastic member. The first support member and the first elastic member respectively provide good rigid protection and elastic protection for the screen. The entire elastic component has a good impact resistance capability and a good squeezing resistance capability, so that the elastic component can better protect the screen, improve drop reliability of the screen, and help prolong a service life of the screen.

In a possible implementation, when the electronic device is in the folded state, the first portion laps over the first connection portion, the second portion is bent, and the third portion laps over the second connection portion. When the electronic device is switched from the unfolded state to the folded state, the first portion moves relative to the first connection portion, the second portion bends relative to the first portion, and the third portion moves relative to the second connection portion. In this way, regardless of whether the electronic device in this implementation is in the unfolded state or the folded state, the first support member can cover, in the thickness direction of the electronic device, a part of a gap between the main shaft portion and the first connection portion of the hinge assembly and a part of a gap between the main shaft portion and the second connection portion of the hinge assembly, to avoid a case that unfolding and folding of the electronic device are affected because an outer edge of the first support member interferes with the hinge assembly because the outer edge of the first support member is located in a gap of the hinge assembly. In addition, the first support member can lap over the first connection portion and the second connection portion. This helps provide a flat support environment for subsequent component fastening and assembling.

In a possible implementation, the main shaft portion has a flat surface. The flat surface faces the screen, and the second portion of the first support member is fastened to the flat surface. When the electronic device is in the unfolded state, the flat surface is parallel to the screen. In this way, the main shaft portion of the hinge assembly has a flat surface, to facilitate fastening the elastic component to the main shaft portion.

In a possible implementation, a thickness of the first support member is less than or equal to a thickness of the first elastic member. In this way, the first support member is thin. This helps reduce the rebound force of the electronic device during bending, to improve unfolding and folding experience of the electronic device.

In a possible implementation, the first elastic member is provided with at least one first through hole. The first through hole exposes a part of the first support member. The elastic component further includes at least one first adhesive. The first adhesive is located in the first through hole and is connected to the first support member and the screen. In this way, the first adhesive can use a thickness space of the first elastic member, so that other components can be fastened without increasing a thickness of the elastic component. This helps implement a thin design of the electronic device. In addition, a through hole (namely, the first through hole in this implementation) on the first elastic member may be used to control a thickness of the first adhesive, to avoid a problem that stability of connections between other components cannot be ensured because the first adhesive is excessively thin, and avoid a problem that the screen is uneven because the first adhesive is excessively thick.

In a possible implementation, the first support member is provided with at least one second through hole. The second through hole exposes a part of the main shaft portion. The second through hole communicates with the first through hole. An opening size of the second through hole is not greater than an opening size of the first through hole. When the electronic device is in the unfolded state, the first through hole at least partially overlaps the second through hole in the thickness direction of the electronic device. The first adhesive is located in the second through hole and the first through hole and is connected to the part of the main shaft portion, the part of the first support member, and a part of the screen.

It may be understood that, in this implementation, an opening of the second through hole of the first support member may not be larger than an opening of the first through hole of the first elastic member. When the opening of the second through hole is equal to the opening of the first through hole, the second through hole may further expose the part of the main shaft portion exposed by the first through hole, so that the first adhesive can fasten other components to the hinge assembly. When the opening of the second through hole is smaller than the opening of the first through hole, the first through hole may further expose a part of an upper surface of the first support member. In this way, when a second support member is fastened by the first adhesive, the opening of the second through hole is small, and the second through hole exposes only a part of a flat surface a of the hinge assembly, so that the first adhesive does not overflow from the second through hole to other components of the hinge assembly when the first adhesive fastens the second support member to the hinge assembly. This can effectively avoid a problem that other components are adhered to each other due to overflow of the first adhesive. In addition, the opening of the first through hole is larger than the opening of the second through hole, so that the second support member can be fastened to the upper surface of the first support member by the first adhesive while being directly fastened to the hinge assembly by the first adhesive, to increase a fastening area between the first adhesive and the first support member. This can effectively improve stability of a connection between the second support member and the hinge assembly, and also improve stability of a connection between the second support member and the first support member, to help improve overall structural stability of the electronic device.

In a possible implementation, the support portion further includes a second support member. When the electronic device is in the unfolded state, the second support member is stacked between the first elastic member and the screen in the thickness direction of the electronic device. In this way, there are a large quantity of support members of the elastic component, so that the entire support portion can better absorb the impact force and/or the squeezing force of the hinge assembly on the screen, reduce the impact force on the screen, and provide good rigid support for the screen. This helps improve drop reliability of the screen and prolong a service life of the electronic device.

In a possible implementation, when the electronic device is in the unfolded state, a width of a gap between the first connection portion and the second connection portion in a first direction is greater than or equal to a width of the second support member in the first direction. In this way, the second support member is narrow, so that a rebound force of the second support member during bending can be effectively reduced, and the electronic device can be unfolded and folded more smoothly. This helps enhance user experience.

In a possible implementation, the elastic component further includes a second adhesive. The second adhesive is connected to the second support member and the screen. When the electronic device is in the unfolded state, the second adhesive is stacked between the second support member and the screen in the thickness direction of the electronic device. When the electronic device is in the unfolded state, a direction from the first housing to the second housing is the first direction, and a width of the second adhesive is less than or equal to the width of the second support member in the first direction. In this way, most part of the second adhesive can be located right above the main shaft portion of the hinge assembly. The second adhesive is narrow. This can effectively reduce a rebound force of the second adhesive during bending, and helps improve unfolding and folding experience of the electronic device.

In a possible implementation, the elastic portion further includes a second elastic member. The second elastic member is fastened between the second support member and the screen. The first support member, the first elastic member, the second support member, and the second elastic member are sequentially arranged in a direction from the hinge assembly to the screen.

It may be understood that the elastic component in this implementation may include the first support member, the first elastic member, the second support member, and the second elastic member. The first support member, the first elastic member, the second support member, and the second elastic member may be sequentially arranged in the direction from the hinge assembly to the screen in a stacked manner. The first support member and the second support member may jointly form the support portion of the elastic component. The first elastic member and the second elastic member may jointly form the elastic portion of the elastic component. In this way, a plurality of support members (namely, the first support member and the second support member in this implementation) and a plurality of elastic members (namely, the first elastic member and the second elastic member in this implementation) in the elastic component are alternately stacked, so that the entire elastic component can form a structure similar to a bulletproof vest. This helps improve an impact resistance capability and a squeezing resistance capability of the elastic component. In comparison with directly increasing the thickness of the first support member and the thickness of the first elastic member to improve the impact resistance capability and the squeezing resistance capability of the elastic component, in this implementation, the elastic component has better impact resistance and squeezing resistance capabilities under a same thickness condition. In addition, under a same performance condition, each support member and each elastic member of the elastic component in this implementation are thin, and the plurality of support members and the plurality of elastic members are fastened to each other through an adhesive layer. In this way, when the electronic device is bent, adjacent support members and elastic members may move relative to each other, to greatly reduce a rebound force of the entire elastic component during bending. In other words, when specific performance is ensured, the elastic component in this implementation may be thinner. This helps implement a thin design of the electronic device. In addition, in this implementation, a total thickness of the elastic portion of the elastic component may be within a range of . millimeters to . millimeters, and a total thickness of the support portion may be less than or equal to the total thickness of the elastic portion. In this way, the elastic component can have a low total thickness while having a good impact resistance capability and a good squeezing resistance capability. This helps implement a thin design of the electronic device.

In addition, in comparison with that the support member is disposed adjacent to the screen, and the screen is prone to be damaged during bending because the support member has a large rebound force during bending, in this implementation, the elastic member (namely, the second elastic member in this implementation) may be disposed adjacent to the screen, and the elastic member has a small rebound force during bending, to effectively reduce a probability of damaging the screen during bending, and help prolong a service life of the electronic device.

In a possible implementation, the support portion includes the first support member and a second support member. The elastic portion includes the first elastic member and a second elastic member. The first elastic member, the first support member, the second elastic member, and the second support member are sequentially arranged in a direction from the hinge assembly to the screen.

It may be understood that the elastic component in this implementation may include the first support member, the first elastic member, the second support member, and the second elastic member, and the first elastic member, the first support member, the second elastic member, and the second support member may be sequentially arranged in the direction from the hinge assembly to the screen in a stacked manner. In this way, in comparison with that the elastic member is disposed adjacent to the screen, and the screen is prone to be damaged when the electronic device drops because the elastic member has a limited capability of dispersing and/or absorbing an impact force when the electronic device drops, in this implementation, the support member (namely, the second support member in this implementation) may be disposed adjacent to the screen. When the electronic device drops, the support member can better absorb the impact force, and can provide good rigid support for the screen, to effectively reduce a probability of damaging the screen when the electronic device drops, and help prolong the service life of the electronic device.

In a possible implementation, the elastic component further includes a third adhesive. The third adhesive is connected between the second elastic member and the screen. When the electronic device is in the unfolded state, a width of the third adhesive is equal to a width of the second elastic member in the first direction. In this way, the third adhesive can fasten the second elastic member to the screen while having small impact on the rebound force of the electronic device during bending, to help improve unfolding and folding experience of the electronic device.

In a possible implementation, the screen includes a first portion, a second portion, and a third portion that are sequentially disposed in the first direction. The first portion is connected to the first housing. The third portion is connected to the second housing. The second portion is connected between the first portion and the third portion. When the electronic device is in the unfolded state, the screen is unfolded, and the first portion, the second portion, and the third portion are sequentially arranged in the first direction. The second portion and the hinge assembly are stacked in the thickness direction of the electronic device. The width of the second elastic member in the first direction is greater than or equal to a width of the second portion in the first direction. When the electronic device is in the folded state, the first portion and the third portion are folded relative to each other, and the second portion is bent. In this way, the second elastic member and the third adhesive can enhance stiffness of the screen, to effectively avoid a problem that a part of the screen bulges when the electronic device drops in the unfolded state. This helps improve overall structural strength of the screen and prolong a service life of the screen.

In a possible implementation, the elastic component further includes a lubricating member. The lubricating member is fastened to a surface that is of the first elastic member and that faces away from the first support member. In this way, a friction coefficient between the first elastic member and another component located above the first elastic member can be effectively reduced by disposing the lubricating member, to help improve unfolding and folding experience of the electronic device.

In a possible implementation, the lubricating member includes a main body portion, a first bending portion, and a second bending portion. The main body portion is connected to the first bending portion and the second bending portion. The first bending portion includes a first connection portion and a first extension portion. The second bending portion includes a second connection portion and a second extension portion. When the electronic device is in the unfolded state, the first extension portion and the main body portion are spaced from each other in the thickness direction of the electronic device. The second extension portion and the main body portion are spaced from each other in the thickness direction of the electronic device. The first extension portion and the second extension portion are located on a side that is of the main body portion and that faces the hinge assembly. The first extension portion and the second extension portion are spaced from each other. The first connection portion is connected to the main body portion and the first extension portion. The second connection portion is connected to the main body portion and the second extension portion. The main body portion, the first connection portion, and the first extension portion form a first semi-enclosed accommodation space. The main body portion, the second connection portion, and the second extension portion form a second semi-enclosed accommodation space. A part of the first elastic member and at least a part of the first portion of the first support member are located in the first semi-enclosed accommodation space. A part of the first elastic member and at least a part of the third portion of the first support member are located in the second semi-enclosed accommodation space.

It may be understood that, in comparison with that two lubricating members are respectively disposed on a surface that is of the first support member and that faces away from the first elastic member and the surface that is of the first elastic member and that faces away from the first support member, and an outer edge of the first support member is exposed in an external environment, in this implementation, the lubricating member may have the main body portion that covers the surface that is of the first elastic member and that faces away from the first support member, and also have the first bending portion bent toward the first portion of the first support member and the second bending portion bent toward the third portion of the first support member. In this way, the lubricating member can not only cover a surface of the first elastic member, a part of a surface of the first portion of the first support member, and a part of a surface of the third portion of the first support member, but also wrap outer edges of the first elastic member and the first support member, so that the lubricating member can further protect the outer edges of the first elastic member and the first support member, to avoid abnormal noise caused by scratching between another component and the outer edges of the first elastic member and the first support member. In addition, the first support member is thin, and the outer edge of the first support member is sharp. Disposing the lubricating member to wrap the outer edge of the first support member (namely, an edge that is of the first portion of the first support member and that is away from the third portion and an edge that is of the third portion and that is away from the first portion in this implementation) can also effectively avoid a case that the edge of the first support member scratches an assembly person during mounting of the first support member and another component, to help improve safety of an assembly process.

In a possible implementation, when the electronic device is in the unfolded state, the main body portion, the first elastic member, the first portion of the first support member, and the first extension portion are sequentially stacked in the thickness direction of the electronic device. The first connection portion is disposed on a side surface that is of the first portion of the first support member and that is away from the third portion of the first support member. The main body portion, the first elastic member, the third portion of the first support member, and the second extension portion are sequentially stacked. The second connection portion is disposed on a side surface that is of the third portion of the first support member and that is away from the first portion of the first support member. In this way, the lubricating member can better wrap the outer edge of the first support member, to effectively avoid abnormal noise caused by scratching between the outer edge of the first support member and another component.

In a possible implementation, the first elastic member includes a first end and a second end that are disposed opposite to each other in a length extension direction. The first end is provided with at least one groove. An opening direction of the groove is a direction from the second end to the first end.

It may be understood that, in this implementation, the first end and the second end of the first elastic member are provided with one or more grooves, to provide a release space for bulges that occur at ends (namely, the first end and the second end) of the first elastic member when the electronic device drops in the unfolded state. This can effectively avoid a problem that the screen fails due to broken routing of the screen caused by a bulge on the screen that occurs when the first elastic member bulges at the edge of the end when the electronic device drops in the unfolded state, and helps prolong a service life of the screen and enhance user experience.

In a possible implementation, the first portion of the first support member is provided with a plurality of first holes. The plurality of first holes are spaced from each other in a length extension direction of the first support member. The third portion of the first support member is provided with a plurality of second holes, and the plurality of second holes are spaced from each other in the length extension direction of the first support member. A length extension direction of the first hole and a length extension direction of the second hole both intersect with the length extension direction of the first support member.

It may be understood that, in this implementation, the first portion of the first support member is provided with the plurality of first holes whose extension directions intersect with the length extension direction of the first support member, and the third portion of the first support member is provided with the plurality of second holes whose extension directions intersect with the length extension direction of the first support member, so that a rebound force of the first support member during bending can be effectively reduced, to help improve unfolding and folding experience of the electronic device.

In a possible implementation, the first support member is in a long-bar shape. At least one corner of the first support member has an avoidance space.

It may be understood that, in this implementation, an avoidance space c is formed by performing edge cutting on the corner of the first support member, so that the edge of the first support member can be away from an antenna in the electronic device. This can reduce radio frequency interference of the first support member to the antenna in the electronic device, and reduce impact of the first support member on antenna performance of the entire electronic device.

In a possible implementation, a thickness of the support portion is less than or equal to a thickness of the elastic portion. In this way, a total thickness of the support portion may be less than or equal to a total thickness of the elastic portion. In this way, the elastic component can have a low total thickness while having a good impact resistance capability and a good squeezing resistance capability. This helps implement a thin design of the electronic device.

In a possible implementation, the hinge assembly is located on an inner side of the screen. In this way, the electronic device may be an electronic device with an inward foldable screen. When the electronic device drops, especially when the electronic device drops in the folded state, the support portion of the elastic component can well absorb an impact force and/or a squeezing force of the hinge assembly on the screen, reduce the impact force on the screen, and provide good rigid support for the screen. The elastic portion of the elastic component can have a good elastic effect on the impact force and/or the squeezing force on the screen, and the elastic portion can also absorb and disperse the impact force and/or the squeezing force on the screen. The elastic component can effectively absorb the impact force on the screen from falling, and avoid a problem that the screen generates a bright spot and a black spot due to a strong collision between the screen and the hinge assembly. This helps improve structural reliability of the screen and prolong a service life of the screen. In other words, drop reliability of the screen in this implementation can be effectively improved through the elastic component located between the screen and the hinge assembly without compromising the thickness of the screen. In addition, an overall thickness of the screen is low, so that a rebound force of the electronic device during bending can be effectively reduced, to help improve unfolding and folding experience of a user.

In a possible implementation, the first housing includes a first mounting groove. The second housing includes a second mounting groove. When the electronic device is in the unfolded state, the first mounting groove and the second mounting groove form an accommodation space. At least a part of the hinge assembly and at least a part of the elastic component are located in the accommodation space. In this way, at least the part of the elastic component may be located in the accommodation space. In one aspect, the elastic component may use a thickness space of a housing apparatus, so that the elastic component can ensure drop reliability of the screen without increasing a thickness of the entire electronic device, to help implement a thin design of the electronic device. In another aspect, no height difference is generated between the elastic component and a first adhesive and a second adhesive of the housing apparatus, so that a flat support environment can be provided for the screen, to improve a display effect of the screen and enhance user experience.

According to a second aspect, a screen assembly is provided. The screen assembly includes a screen and at least one elastic member. The screen includes a first portion, a second portion, and a third portion. The second portion is connected between the first portion and the third portion. The elastic member is located on a non-display side of the screen, and a part of the elastic member is fastened to the second portion. A material of the elastic member is an elastic material or a non-Newtonian fluid material. A width of the elastic member in a first direction is less than a width of the screen in the first direction. The first direction is a direction from the first portion to the second portion when the screen assembly is in an unfolded state.

It may be understood that, in comparison with sequentially stacking and fastening the elastic member and the screen on a hinge assembly of an electronic device, in this implementation, the elastic member and the screen are first assembled to form the screen assembly, and then the entire screen assembly is fastened to the hinge assembly. In this way, the screen can provide a flat support environment during assembly of the elastic member, so that the elastic member is more easily assembled on the screen. In addition, this helps reduce bubbles in an adhesive between the elastic member and the screen, to effectively improve stability of a connection between the elastic member and the screen, and effectively avoid a problem that the elastic member and the screen are degummed and delaminated at the bubbles due to a plurality of times of unfolding and folding of the electronic device. This helps improve overall structural stability of the electronic device and prolong a service life of the electronic device.

In a possible implementation, the width of the elastic member in the first direction is greater than or equal to a width of a bending portion in the first direction. In this way, the elastic member can enhance stiffness of the screen, to effectively avoid a problem that a part of the screen bulges when the electronic device drops in the unfolded state. This helps improve overall structural strength of the screen and prolong a service life of the screen.

In a possible implementation, the screen assembly further includes at least one support member. The support member is fastened to a surface that is of the elastic member and that faces away from the screen, and a material of the support member is a rigid material. A width of the support member in the first direction is less than or equal to the width of the elastic member in the first direction. In this way, the screen can provide a flat support environment during assembly of the support member, so that the support member is more easily assembled on the screen. In addition, this helps reduce bubbles in an adhesive between the support member and the elastic member, to effectively improve stability of a connection between the support member and the elastic member, and effectively avoid a problem that the support member and the elastic member are degummed and delaminated at the bubbles due to a plurality of times of unfolding and folding of the electronic device. This helps improve overall structural stability of the electronic device and prolong the service life of the electronic device.

In a possible implementation, a thickness of the support member is less than or equal to a thickness of the elastic member. In this way, the support member is thin, so that a rebound force of the support member during bending can be effectively reduced, and the electronic device can be unfolded and folded more smoothly. This helps enhance user experience.

### BRIEF DESCRIPTION OF DRAWINGS

To describe the technical solutions in implementations of this application or in the background more clearly, the following briefly describes the accompanying drawings for describing implementations of this application or the background.
FIG. 1 is a diagram of a structure of an electronic device in an unfolded state according to an implementation of this application;
FIG. 2 is a diagram of a structure of the electronic device shown in FIG. 1 in a folded state;
FIG. 3 is a diagram of a partial exploded structure of the electronic device shown in FIG. 1 in some implementations;
FIG. 4 is a diagram of a partial cross-sectional structure in an implementation in which a partial structure of the electronic device shown in FIG. 1 is cut along A-A;
FIG. 5 is a diagram of a partial cross-sectional structure in an implementation in which a partial structure of the electronic device shown in FIG. 2 is cut along B-B;
FIG. 6 is a diagram of a structure of a first support member of an elastic component shown in FIG. 3;
FIG. 7 is a diagram of an assembled structure of a first support member and a first elastic member of an elastic component shown in FIG. 3;
FIG. 8 is a diagram of an exploded structure of a first support member, a first elastic member, and a lubricating member of an elastic component shown in FIG. 3;
FIG. 9a is a diagram of a partial cross-sectional structure in an implementation in which a partial structure of the electronic device shown in FIG. 1 is cut along A-A;
FIG. 9b is a diagram of a structure obtained after the structure shown in FIG. 9a is flipped up and down;
FIG. 10 is a diagram of a partial structure of the electronic device shown in FIG. 1;
FIG. 11a is a diagram of a partial cross-sectional structure in an implementation in which a partial structure of the electronic device shown in FIG. 1 is cut along A-A;
FIG. 11b is a diagram of a partial cross-sectional structure in an implementation in which a partial structure of the electronic device shown in FIG. 2 is cut along B-B;
FIG. 12 is a diagram of a partial structure of the electronic device shown in FIG. 1;
FIG. 13 is a diagram of a partial cross-sectional structure in an implementation in which a partial structure of the electronic device shown in FIG. 1 is cut along A-A;
FIG. 14 is a diagram of a partial structure of the electronic device shown in FIG. 1;
FIG. 15a is a diagram of a partial cross-sectional structure in an implementation in which a partial structure of the electronic device shown in FIG. 1 is cut along A-A;
FIG. 15b is a diagram of a partial cross-sectional structure in an implementation in which a partial structure of the electronic device shown in FIG. 2 is cut along B-B;
FIG. 16a is a diagram of an exploded structure obtained after a screen, a second elastic member, and a third adhesive of the electronic device shown in FIG. 3 are flipped up and down;
FIG. 16b is a diagram of an assembled structure of the screen, the second elastic member, and the third adhesive shown in FIG. 16a;
FIG. 17 is a diagram of a partial cross-sectional structure in an implementation in which a partial structure of the electronic device shown in FIG. 1 is cut along A-A;
FIG. 18a is a diagram of a partial cross-sectional structure in an implementation in which the electronic device shown in FIG. 1 is cut along A-A;
FIG. 18b is a diagram of a partial cross-sectional structure in an implementation in which a partial structure of the electronic device shown in FIG. 1 is cut along A-A;
FIG. 19a is a diagram of a partial cross-sectional structure in an implementation in which a partial structure of the electronic device shown in FIG. 2 is cut along B-B;
FIG. 19b is a diagram of a partial cross-sectional structure in an implementation in which the electronic device shown in FIG. 2 is cut along B-B;
FIG. 20 is a diagram of a structure of the first support member shown in FIG. 6 in another implementation;
FIG. 21 is a diagram of a structure of the first support member shown in FIG. 6 in still another implementation;
FIG. 22 is a diagram of a structure of the first support member shown in FIG. 6 in yet another implementation;
FIG. 23 is a diagram of a structure of the first elastic member shown in FIG. 8 in another implementation; and
FIG. 24 is a diagram of a structure of the first elastic member shown in FIG. 23 in another implementation.

### DESCRIPTION OF EMBODIMENTS

The following describes implementations of this application with reference to the accompanying drawings in the implementations of this application.

In descriptions of implementations of this application, it should be noted that the terms "mounting" and "connection" should be understood in a broad sense, unless otherwise specified and limited. For example, "connection" may be a detachable connection or a non-detachable connection, or may be a direct connection or a connection through an intermediate medium. "Fastening" means that two parties are connected to each other and a relative position relationship remains unchanged after the two parties are connected to each other. "Rotatable connection" means that two parties are connected to each other and can rotate relative to each other after the two parties are connected to each other. "Slidable connection" means that two parties are connected to each other and can slide relative to each other after the two parties are connected to each other. The orientation terms mentioned in implementations of this application, for example, "up", "down", "left", "right", "inside", and "outside", are merely directions based on the accompanying drawings. Therefore, the orientation terms are used to better and more clearly describe and understand implementations of this application, but do not indicate or imply that a specified apparatus or element needs to have a specific orientation and be constructed and operated in a specific orientation. Therefore, this cannot be understood as a limitation on implementations of this application. "A plurality of" means at least two.

In implementations of this application, the terms "first", "second", "third", and "fourth" are merely intended for a purpose of description, and shall not be understood as an indication or implication of relative importance or an implicit indication of a quantity of indicated technical features. Therefore, a feature limited by "first", "second", "third", or "fourth" may explicitly or implicitly include one or more features.

In implementations of this application, "and/or" describes only an association relationship between associated objects and indicates that three relationships may exist. For example, A and/or B may indicate the following three cases: Only A exists, both A and B exist, and only B exists. In addition, the character "/" in this specification generally indicates an "or" relationship between the associated objects.

Reference to "an implementation", "some implementations", or the like described in this specification means that one or more implementations of this application include a specific feature, structure, or characteristic described with reference to the implementations. Therefore, statements such as "in an implementation", "in some implementations", "in some other implementations", and "in other implementations" that appear at different places in this specification do not necessarily mean referring to a same implementation. Instead, the statements mean "one or more but not all of implementations", unless otherwise specifically emphasized in another manner. Terms "include", "contain", "have", and their variants all mean "include but are not limited to", unless otherwise specifically emphasized in another manner.

It may be understood that specific implementations described herein are merely used to explain a related invention, but are not intended to limit the invention. In addition, it should be noted that, for ease of description, only a part related to the invention is shown in the accompanying drawings.

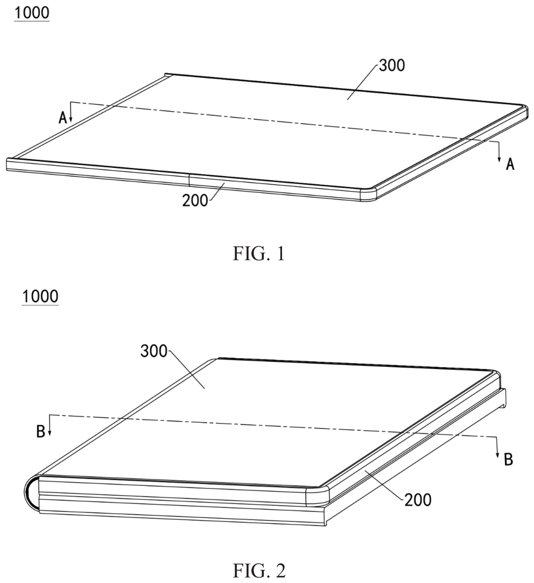

FIG. 1 is a diagram of a structure of an electronic device 1000 in an unfolded state according to an implementation of this application. FIG. 2 is a diagram of a structure of the electronic device 1000 shown in FIG. 1 in a folded state.

As shown in FIG. 1 and FIG. 2, the electronic device 1000 may include a housing apparatus 200 and a screen 300. The screen 300 may be mounted on the housing apparatus 200. The housing apparatus 200 may be in the unfolded state shown in FIG. 1 and the folded state shown in FIG. 2. The housing apparatus 200 may alternatively be in an intermediate state between the unfolded state and the folded state. The intermediate state may be any state between the unfolded state and the folded state. The screen 300 may move with the housing apparatus 200. The housing apparatus 200 may drive the screen 300 to be unfolded or folded, so that the electronic device 1000 can be unfolded to the unfolded state or folded to the folded state. When the electronic device 1000 is in the folded state, the housing apparatus 200 may be located on an inner side of the screen 300. In other words, the electronic device 1000 may be an electronic device 1000 with an outward foldable screen. For ease of understanding, a direction that is the same as a light-emitting direction of the screen 300 is defined as "up", and a direction that is opposite to the light-emitting direction of the screen 300 is defined as "down". In some implementations, the electronic device 1000 may alternatively be an electronic device with an inward foldable screen.

In this implementation, when the electronic device 1000 is in the unfolded state, the screen 300 may be unfolded. In this case, the screen 300 can perform full-screen display, and the electronic device 1000 has a large display area. This helps improve viewing experience and operation experience of a user. When the electronic device 1000 is in the folded state, a planar size of the electronic device 1000 is small, so that it is convenient for the user to carry and place the electronic device 1000.

For example, the screen 300 may be integrated with a display function and a touch sensing function. The display function of the screen 300 is used to display an image, a video, and the like, and the touch sensing function of the screen 300 is used to sense a touch action of the user, so as to implement human-computer interaction. For example, the screen 300 includes a bendable flexible display. The flexible display may be a liquid crystal display (liquid crystal display, LCD), an organic light-emitting diode (organic light-emitting diode, OLED) display, an active-matrix organic light-emitting diode (active-matrix organic light-emitting diode, AMOLED) display, a flexible light-emitting diode (flexible light-emitting diode, FLED) display, a mini-LED display, a micro-LED display, a micro-OLED display, a quantum dot light-emitting diode (quantum dot light-emitting diode, QLED) display, or the like.

For example, the electronic device 1000 may further include a plurality of components (not shown in the figure), and the plurality of components are mounted inside the housing apparatus 200. The plurality of components may include, for example, a processor, an internal memory, an external memory interface, a universal serial bus (universal serial bus, USB) interface, a charging management module, a power management module, a battery, an antenna, a communication module, a camera, an audio module, a speaker, a receiver, a microphone, a headset interface, a sensor module, a button, a motor, an indicator, a subscriber identification module (subscriber identification module, SIM) card interface, and the like.

It should be understood that, FIG. 1 and FIG. 2 merely show examples of some components included in the electronic device 1000. Actual shapes, actual sizes, and actual structures of these components are not limited by FIG. 1 and FIG. 2. In another implementation, when the electronic device 1000 is a device in another form, the electronic device 1000 may not include the screen 300.

In this implementation, an example in which the electronic device 1000 is of a two-fold structure is used for description. To be specific, the electronic device 1000 includes two plate portions and a bending portion connected between the two plate portions. The two plate portions may rotate toward each other to be stacked (corresponding to the folded state), so that the electronic device 1000 is in a form of two layers; or the two plate portions may rotate away from each other to be unfolded (corresponding to the unfolded state). In some other implementations, the electronic device 1000 may alternatively be of a structure of more than three folds, or the like. To be specific, the electronic device 1000 includes more than three plate portions, two adjacent plate portions are connected through a bending portion, and the two adjacent plate portions may rotate toward each other to be stacked or rotate away from each other to be unfolded. When the electronic device 1000 is of a structure of more than three folds, for a structure of the electronic device 1000, refer to the description of the two-fold structure in this embodiment for adaptive design. Details are not described in this application again.

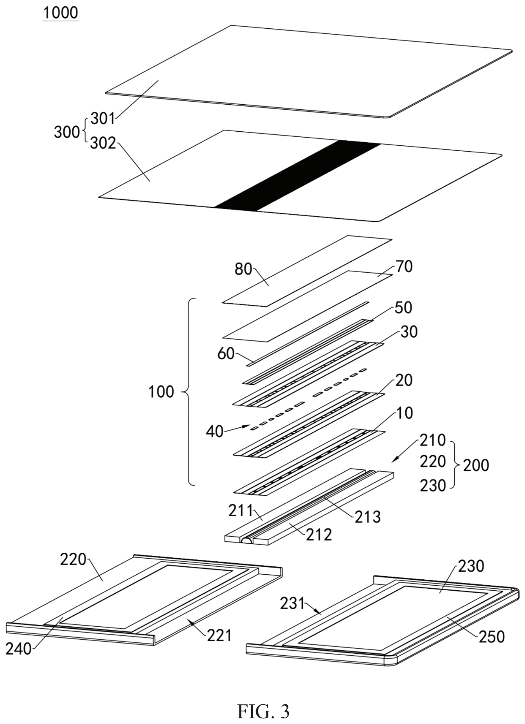

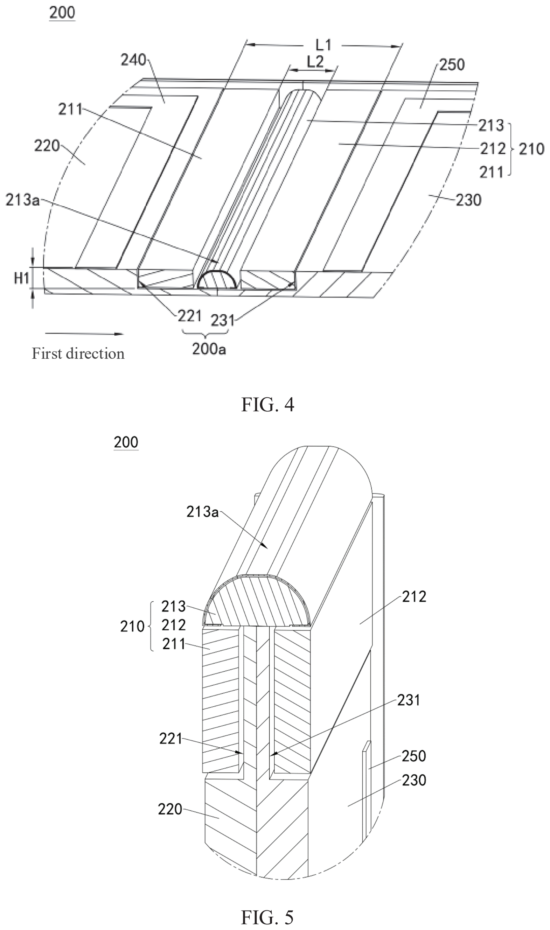

FIG. 3 is a diagram of a partial exploded structure of the electronic device 1000 shown in FIG. 1 in some implementations. FIG. 4 is a diagram of a partial cross-sectional structure in an implementation in which a partial structure of the electronic device 1000 shown in FIG. 1 is cut along A-A. FIG. 5 is a diagram of a partial cross-sectional structure in an implementation in which a partial structure of the electronic device 1000 shown in FIG. 2 is cut along B-B.

As shown in FIG. 3 to FIG. 5, the housing apparatus 200 may include a hinge assembly 210, a first housing 220, and a second housing 230. The hinge assembly 210 may be connected to the first housing 220 and the second housing 230. The hinge assembly 210 may move, so that the first housing 220 and the second housing 230 can be unfolded relative to each other to an unfolded state or folded relative to each other to a folded state. It should be understood that, both the first housing 220 and the second housing 230 are housing components, are configured to mount and fasten other components of the electronic device 1000, and have diversified structures. The hinge assembly 210 is configured to implement relative movement between the first housing 220 and the second housing 230, and also has diversified structures. Specific structures of the first housing 220, the second housing 230, and the hinge assembly 210 are not strictly limited in implementations of this application. The accompanying drawings of this application merely show general structures of the first housing 220, the second housing 230, and the hinge assembly 210 in an implementation.

For example, the hinge assembly 210 may include a first connection portion 211, a second connection portion 212, and a main shaft portion 213. The first connection portion 211 and the second connection portion 212 may be approximately symmetrical. Both the first connection portion 211 and the second connection portion 212 may be connected to the main shaft portion 213. Both the first connection portion 211 and the second connection portion 212 may move relative to the main shaft portion 213, to implement relative unfolding and relative folding actions.

For example, an upper surface of the main shaft portion 213 may be approximately an arc-shaped surface. A part of the upper surface that is of the main shaft portion 213 and that is located at the arc top may be a plane, and forms a flat surface 213a of the main shaft portion 213. In other words, the flat surface 213a may be disposed close to the screen 300. In this case, the upper surface of the main shaft portion 213 may be an incomplete arc-shaped surface. The flat surface 213a may coincide with a central axis of the main shaft portion 213 in a thickness direction of the hinge assembly 210. In other words, the flat surface 213a may be located at an intermediate position of the main shaft portion 213. In some implementations, the first connection portion 211 and the second connection portion 212 each may include a connector for movement and a support plate for supporting. The support plate may be located above the connector.

For example, the first housing 220 may be provided with a first mounting groove 221. The second housing 230 may be provided with a second mounting groove 231. The first connection portion 211 of the hinge assembly 210 may be located in the first mounting groove 221 and is connected to the first housing 220. The second connection portion 212 of the hinge assembly 210 may be located in the second mounting groove 231 and is connected to the second housing 230. In this implementation, the first connection portion 211 may be fastened to the first housing 220. The second connection portion 212 may be fastened to the second housing 230. In some implementations, the first connection portion 211 may be further movably connected (for example, rotatably connected and/or slidably connected) to the first housing 220. Alternatively, the first connection portion 211 may be indirectly fastened to the first housing 220 through another component.

For example, the housing apparatus 200 may further include a first adhesive 240 and a second adhesive 250. The first adhesive 240 may be fastened to an upper surface of the first housing 220. The second adhesive 250 may be fastened to an upper surface of the second housing 230. Both the first adhesive 240 and the second adhesive 250 may be configured to fasten the screen 300.

When the electronic device 1000 is in the unfolded state, the first housing 220 and the second housing 230 may be unfolded relative to each other. The first connection portion 211 and the second connection portion 212 of the hinge assembly 210 may be unfolded relative to each other. The flat surface 213a of the hinge assembly 210 may be parallel to the screen 300. In this case, the first mounting groove 221 may communicate with the second mounting groove 231. The first mounting groove 221 and the second mounting groove 231 may jointly form an accommodation space 200a of the housing apparatus 200. At least a part of the hinge assembly 210 may be located in the accommodation space 200a. In this case, a height difference between an upper surface of the first adhesive 240 and a bottom wall that is of the first mounting groove 221 and that faces the screen 300 in a thickness direction of the electronic device 1000 may be a first distance H1. A width of the hinge assembly 210 is a first width L1. A distance between the first connection portion 211 and the second connection portion 212 of the hinge assembly 210 is a second width L2. One part of the main shaft portion 213 may be located in the first mounting groove 221. The other part of the main shaft portion 213 may be located in the second mounting groove 231. The first connection portion 211 and the second connection portion 212 may be respectively located on two sides of the main shaft portion 213 and unfolded relative to each other. In some implementations, the first connection portion 211 may further include a first support plate for supporting and a first connector for connecting the first housing 220. The first support plate may be fastened to a surface that is of the first connector and that faces the screen 300. The second connection portion 212 may further include a second support plate for supporting and a second connector for connecting the second housing 230. The second support plate may be fastened to a surface that is of the second connector and that faces the screen 300. When a distance between the first support plate and the second support plate is less than or equal to a distance between the first connector and the second connector, the second width L2 is the distance between the first support plate of the first connection portion 211 and the second support plate of the second connection portion 212. When the distance between the first support plate and the second support plate is greater than the distance between the first connector and the second connector, the second width L2 is the distance between the first connector of the first connection portion 211 and the second connector of the second connection portion 212.

When the electronic device 1000 is in the folded state, the first housing 220 and the second housing 230 may be folded relative to each other. The first connection portion 211 and the second connection portion 212 of the hinge assembly 210 may be folded relative to each other and located on a same side of the main shaft portion 213. The main shaft portion 213 may be exposed relative to the first housing 220 and the second housing 230. For example, a lower surface of the first housing 220 may be attached to a lower surface of the second housing 230. In another implementation, when the electronic device 1000 is in the folded state, there may be a gap between the lower surface of the first housing 220 and the lower surface of the second housing 230.

It should be noted that the width of the hinge assembly 210 is a width of the hinge assembly 210 in a first direction when the electronic device 1000 is in the unfolded state. The first direction is a direction from the first housing 220 to the second housing 230 when the electronic device 1000 is in the unfolded state. The first direction is perpendicular to a length extension direction of the hinge assembly 210 and the thickness direction of the electronic device 1000 (the first direction is also indicated by an arrow in FIG. 4). Unless otherwise specified in the following description of this application, a width direction of a component is the first direction shown in FIG. 4. A width of a component or a distance between two components is a width of the component or a distance between the two components in the first direction when the electronic device 1000 is in the unfolded state.

Still refer to FIG. 3. The electronic device 1000 may further include an elastic component 100. The elastic component 100 may be fastened between the screen 300 and the hinge assembly 210. When the electronic device 1000 is in the unfolded state, the screen 300, the elastic component 100, and the hinge assembly 210 may be sequentially stacked. The elastic component 100 may be used to improve reliability of the screen 300 when the electronic device 1000 drops. The elastic component 100 may include an elastic portion and a support portion. The elastic portion and the support portion may be stacked in the thickness direction of the electronic device 1000. A material of the elastic portion may be different from a material of the support portion. The elastic portion may include at least one elastic member. The support portion may include at least one support member. When the elastic portion includes only one elastic member, and the support portion includes only one support member, the elastic member and the support member may be stacked in the thickness direction of the electronic device 1000. When the elastic portion includes a plurality of elastic members, and the support portion includes a plurality of support members, the plurality of elastic members and the plurality of support members may be sequentially alternated and stacked.

When the electronic device 1000 drops and the screen 300 is impacted, the support portion of the elastic component 100 can well absorb an impact force and/or a squeezing force of the hinge assembly 210 on the screen 300, reduce the impact force on the screen 300, and provide good rigid support for the screen 300. The elastic portion of the elastic component 100 can have a good elastic effect on the impact force and/or the squeezing force on the screen 300, and the elastic portion can also absorb and disperse the impact force and/or the squeezing force on the screen 300. In other words, the elastic component 100 in this implementation includes both the elastic portion and the support portion. The elastic portion and the support portion can respectively provide good elastic protection and rigid protection for the screen 300. The entire elastic component 100 has a good impact resistance capability and a good squeezing resistance capability, so that the elastic component 100 can better protect the screen 300, improve drop reliability of the screen 300, and help prolong a service life of the screen 300.

In this implementation, the elastic component 100 may include a first support member 10, a first elastic member 20, a lubricating member 30, a first adhesive 40, a second support member 50, a second adhesive 60, a second elastic member 70, and a third adhesive 80. In other words, the support portion of the elastic component 100 may include two support members. The elastic portion of the elastic component 100 may include two elastic members. When the electronic device 1000 is in the unfolded state, the first support member 10, the first elastic member 20, the lubricating member 30, the second support member 50, the second adhesive 60, the second elastic member 70, and the third adhesive 80 may be sequentially stacked in a direction from the hinge assembly 210 to the screen 300.

When the electronic device 1000 is in the unfolded state, each component of the elastic component 100 may be in an unfolded state accordingly. A width of the elastic component 100 may be less than or equal to the first width L1 (as shown in FIG. 4). When the electronic device 1000 is in the folded state, each component of the elastic component 100 may be in a folded state accordingly. In some other implementations, the elastic component 100 may alternatively not include the second elastic member 70, the second support member 50, the second adhesive 60, the lubricating member 30, and the third adhesive 80.

The following specifically describes structures and relative position relationships of components in the elastic component 100 with reference to related accompanying drawings.

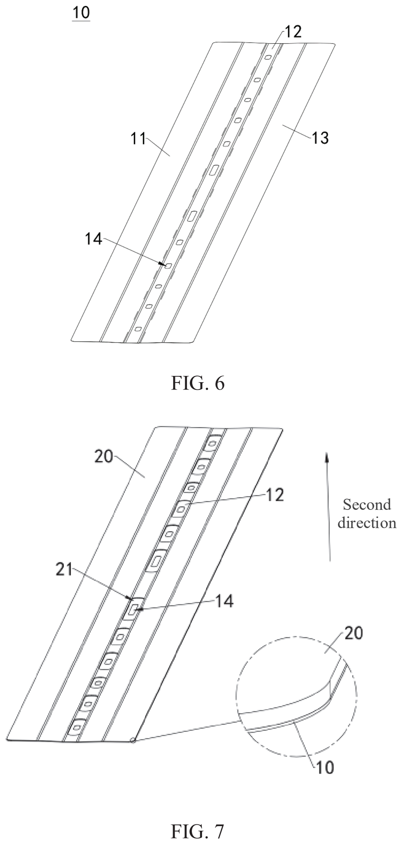

FIG. 6 is a diagram of a structure of the first support member 10 of the elastic component 100 shown in FIG. 3.

As shown in FIG. 6, the first support member 10 may be made of a rigid material with specific strength and hardness. The first support member 10 may be in a thin sheet shape. For example, the first support member 10 may be a steel sheet. The first support member 10 can be bent under an external force. Certainly, when a support performance requirement is satisfied, the first support member 10 may alternatively be a metal sheet or a non-metal sheet like an aluminum sheet, a stainless steel sheet, a titanium alloy sheet, an aluminum alloy sheet, or a copper alloy sheet. This is not strictly limited in this application.

For example, the first support member 10 may be approximately rectangular. The first support member 10 may include a first portion 11, a second portion 12, and a third portion 13. The second portion 12 may be connected between the first portion 11 and the third portion 13. In this case, the first portion 11, the second portion 12, and the third portion 13 may be sequentially arranged in a width direction of the first support member 10. It should be understood that the first portion 11, the second portion 12, and the third portion 13 of the first support member 10 are schematically shown through division by using dashed lines in both FIG. 6 and FIG. 7. In this implementation, although the first support member 10 is divided into three parts for description, the first support member 10 may be an integrated structure, in other words, the first portion 11, the second portion 12, and the third portion 13 of the first support member 10 may be integrally formed.

FIG. 7 is a diagram of an assembled structure of the first support member 10 and the first elastic member 20 of the elastic component 100 shown in FIG. 3.

As shown in FIG. 7, a material of the first elastic member 20 may be an elastic material or a non-Newtonian fluid material. The elastic material may be a material with specific elasticity, for example, a thermoplastic polyurethane (Thermoplastic Urethane, TPU) elastomer. An elastic modulus of the elastic material may be far less than an elastic modulus of the rigid material. For example, an elastic modulus of the thermoplastic polyurethane elastomer may range from 0.01 GPa to 1 GPa. An elastic modulus of stainless steel may be about 200 GPa. The non-Newtonian fluid material is a material with a non-linear relationship between shear stress and a shear strain rate. Hardness of the elastic material may be far greater than hardness of the non-Newtonian fluid.

For example, a thickness of the first elastic member 20 may be greater than or equal to a thickness of the first support member 10. The thickness of the first elastic member 20 may range from 0.02 millimeters to 0.15 millimeters. For example, the thickness of the first elastic member 20 may be 0.03 millimeters, 0.042 millimeters, 0.075 millimeters, 0.1 millimeters, 0.12 millimeters, or the like. In this way, the first support member 10 is thin. This helps reduce a rebound force of the electronic device 1000 during bending.

For example, the first elastic member 20 may be located above the first support member 10. In this case, the first support member 10 and the first elastic member 20 may be stacked in a second direction. The second direction is the thickness direction of the electronic device 1000 when the electronic device 1000 is in the unfolded state. It should be understood that the second direction described below is applicable to the foregoing definition.

For example, a shape of the first elastic member 20 may be approximately the same as a shape of the first support member 10. A width of the first elastic member 20 may be the same as a width of the first support member 10. The first elastic member 20 may be fastened to an upper surface of the first support member 10 through bonding or the like. When the material of the first elastic member 20 is a thermoplastic polyurethane elastomer, a layer of adhesive may be brushed on a surface of the first elastic member 20, and the first elastic member 20 may be fastened to the first support member 10 through the adhesive. When the material of the first elastic member 20 may be a viscous non-Newtonian fluid material, the first elastic member 20 may be directly bonded and fastened to the upper surface of the first support member 10.

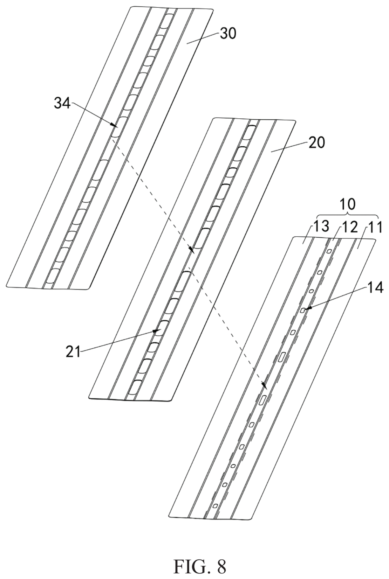

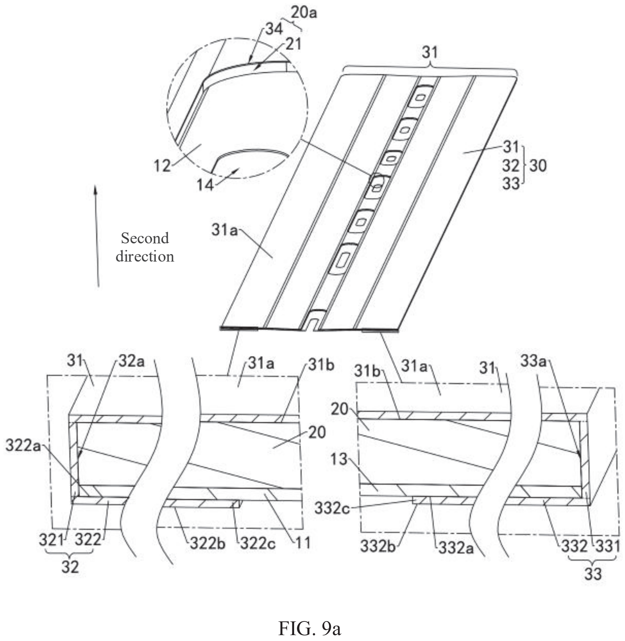

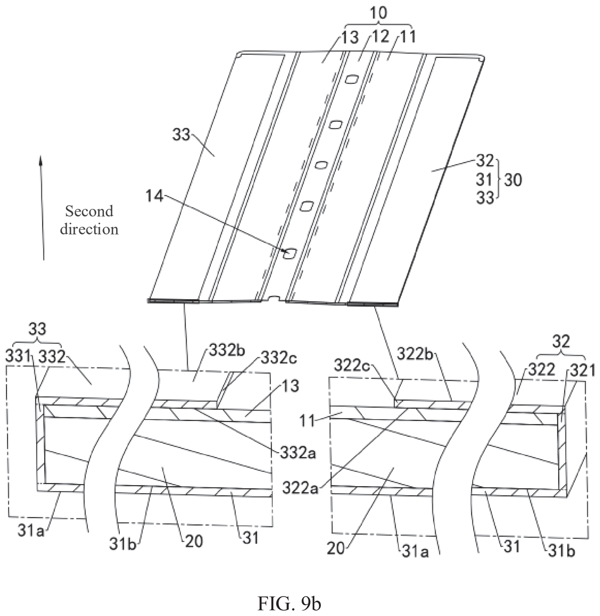

FIG. 8 is a diagram of an exploded structure of the first support member 10, the first elastic member 20, and the lubricating member 30 of the elastic component 100 shown in FIG. 3. FIG. 9a is a diagram of a partial cross-sectional structure in an implementation in which a partial structure of the electronic device 1000 shown in FIG. 1 is cut along A-A. FIG. 9b is a diagram of a structure obtained after the structure shown in FIG. 9a is flipped up and down.

As shown in FIG. 8 and FIG. 9a, the lubricating member 30 may be Mylar, for example, insulated Mylar. A surface of the lubricating member 30 is smooth, and has low surface roughness. The lubricating member 30 may include a main body portion 31, a first bending portion 32, and a second bending portion 33. The main body portion 31 may be connected to the first bending portion 32 and the second bending portion 33. It should be understood that, in this implementation, although the lubricating member 30 is divided into three parts for description, the lubricating member 30 is an integrated structure, in other words, the main body portion 31, the first bending portion 32, and the second bending portion 33 of the lubricating member 30 may be integrally formed. It should be noted that the main body portion 31, the first bending portion 32, and the second bending portion 33 of the lubricating member 30 are schematically shown through division by using dashed lines in both FIG. 9a and FIG. 9b.

For example, the main body portion 31 may include a first surface 31a and a second surface 31b that are disposed opposite to each other. The first surface 31a is a surface that is of the main body portion 31 and that faces the screen 300. The second surface 31b is a surface that is of the main body portion 31 and that faces the hinge assembly 210 (refer to FIG. 3). The first bending portion 32 may include a first connection portion 321 and a first extension portion 322. The first extension portion 322 may be located on a side that is of the second surface 31b of the main body portion 31 and that is away from the first surface 31a. The first extension portion 322 and the main body portion 31 may be spaced from each other in the second direction. The first extension portion 322 may include a third surface 322a and a fourth surface 322b that are disposed opposite to each other. The third surface 322a is a surface that is of the first extension portion 322 and that faces the main body portion 31. The fourth surface 322b is a surface that is of the first extension portion 322 and that faces away from the main body portion 31, in other words, the fourth surface 322b is a surface that is of the first extension portion 322 and that faces the hinge assembly 210. An end that is of the first extension portion 322 and that is away from the first connection portion 321 is a first end 322c. The first connection portion 321 may be connected to the main body portion 31 and the first extension portion 322. In this case, the main body portion 31, the first connection portion 321, and the first extension portion 322 may jointly enclose a first semi-enclosed accommodation space 32a, that is, the main body portion 31 and the first bending portion 32 may jointly enclose the first semi-enclosed accommodation space 32a. It should be noted that the first connection portion 321 and the first extension portion 322 of the first bending portion 32 are schematically shown through division by using dashed lines in both FIG. 9a and FIG. 9b.

For example, the second bending portion 33 may include a second connection portion 331 and a second extension portion 332. The second extension portion 332 may be located on the side that is of the second surface 31b of the main body portion 31 and that is away from the first surface 31a. The second extension portion 332 and the main body portion 31 may be spaced from each other in the second direction. The second extension portion 332 may include a fifth surface 332a and a sixth surface 332b that are disposed opposite to each other. The fifth surface 332a is a surface that is of the second extension portion 332 and that faces the main body portion 31. The sixth surface 332b is a surface that is of the second extension portion 332 and that faces away from the main body portion 31, in other words, the sixth surface 332b is a surface that is of the second extension portion 332 and that faces the hinge assembly 210. An end that is of the second extension portion 332 and that is away from the second connection portion 331 is a second end 332c. The second connection portion 331 may be connected to the main body portion 31 and the second extension portion 332. In this case, the main body portion 31, the second connection portion 331, and the second extension portion 332 may jointly enclose a second semi-enclosed accommodation space 33a, that is, the main body portion 31 and the second bending portion 33 may jointly enclose the second semi-enclosed accommodation space 33a. In this case, the second extension portion 332 and the first extension portion 322 may be located on a same side of the main body portion 31. The second extension portion 332 and the first extension portion 322 may be spaced from each other in a width direction of the lubricating member 30. It should be noted that the second connection portion 331 and the second extension portion 332 of the second bending portion 33 are schematically shown through division by using dashed lines in both FIG. 9a and FIG. 9b.

As shown in FIG. 8 to FIG. 9b, the main body portion 31 of the lubricating member 30 may be located above the first elastic member 20. The second surface 31b of the main body portion 31 may be fastened to an upper surface of the first elastic member 20 through bonding or the like. A shape of the main body portion 31 of the lubricating member 30 may be approximately the same as the shape of the first elastic member 20. A width of the main body portion 31 of the lubricating member 30 may be the same as the width of the first elastic member 20.

For example, the first bending portion 32 of the lubricating member 30 may be bent relative to the main body portion 31 to contact a lower surface of the first portion 11 of the first support member 10. The first extension portion 322 of the first bending portion 32 may be located on a side that is of the first support member 10 and that faces away from the first elastic member 20. The third surface 322a of the first extension portion 322 may be fastened to the lower surface of the first portion 11 of the first support member 10 through bonding or the like. The first end 322c of the first extension portion 322 may face the second extension portion 332. The first connection portion 321 may be disposed on a side surface that is of the first portion 11 of the first support member 10 and that is away from the third portion 13. In this case, the main body portion 31 of the lubricating member 30, the first elastic member 20, the first portion 11 of the first support member 10, and the first extension portion 322 of the lubricating member 30 may be sequentially stacked in the second direction. In this case, a part of the first elastic member 20 and at least a part of the first portion 11 of the first support member 10 may be located in the first semi-enclosed accommodation space 32a.

For example, the second bending portion 33 of the lubricating member 30 may be bent relative to the main body portion 31 to contact a lower surface of the third portion 13 of the first support member 10. The second extension portion 332 of the second bending portion 33 may be located on the side that is of the first support member 10 and that faces away from the first elastic member 20. The fifth surface 332a of the second extension portion 332 may be fastened to the lower surface of the third portion 13 of the first support member 10 through bonding or the like. The second end 332c of the second extension portion 332 may face the first extension portion 322. The second connection portion 331 may be disposed on a side surface that is of the third portion 13 of the first support member 10 and that is away from the first portion 11. In this case, the main body portion 31 of the lubricating member 30, the first elastic member 20, the third portion 13 of the first support member 10, and the second extension portion 332 of the lubricating member 30 may be sequentially stacked in the second direction. In this case, a part of the first elastic member 20 and at least a part of the third portion 13 of the first support member 10 may be located in the second semi-enclosed accommodation space 33a.

It may be understood that, in comparison with that two lubricating members are respectively disposed on a surface that is of a first support member and that faces away from a first elastic member and a surface that is of the first elastic member and that faces away from the first support member, and an outer edge of the first support member is exposed in an external environment, in this implementation, the lubricating member 30 may have the main body portion 31 that covers a surface that is of the first elastic member 20 and that faces away from the first support member 10, and also have the first bending portion 32 bent toward the first portion 11 of the first support member 10 and the second bending portion 33 bent toward the third portion 13 of the first support member 10. In this way, the lubricating member 30 can not only cover a surface of the first elastic member 20, a part of a surface of the first portion 11 of the first support member 10, and a part of a surface of the third portion 13 of the first support member 10, but also wrap outer edges of the first elastic member 20 and the first support member 10, so that the lubricating member 30 can further protect the outer edges of the first elastic member 20 and the first support member 10, to avoid abnormal noise caused by scratching between another component and the outer edges of the first elastic member 20 and the first support member 10. In addition, the first support member 10 is thin, and the outer edge of the first support member 10 is sharp. Disposing the lubricating member 30 to wrap the outer edge of the first support member 10 (namely, an edge that is of the first portion 11 of the first support member 10 and that is away from the third portion 13 and an edge that is of the third portion 13 and that is away from the first portion 11 in this implementation) can also effectively avoid a case that the edge of the first support member 10 scratches an assembly person during mounting of the first support member 10 and another component, to help improve safety of an assembly process.

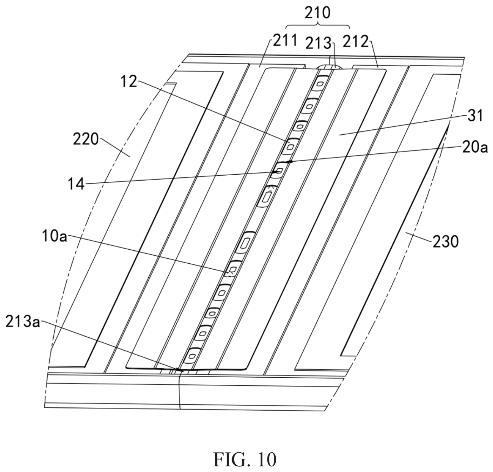

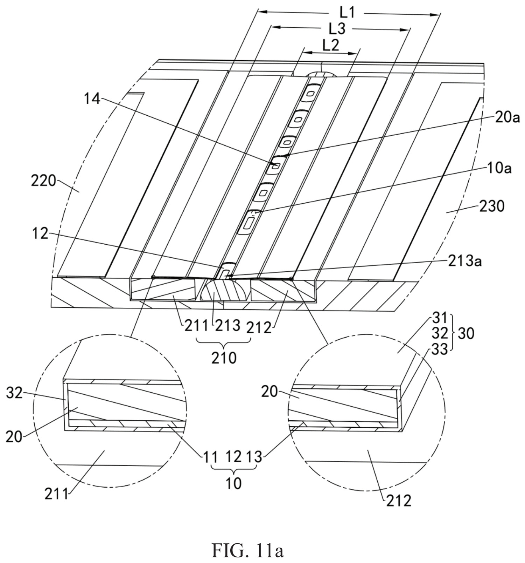

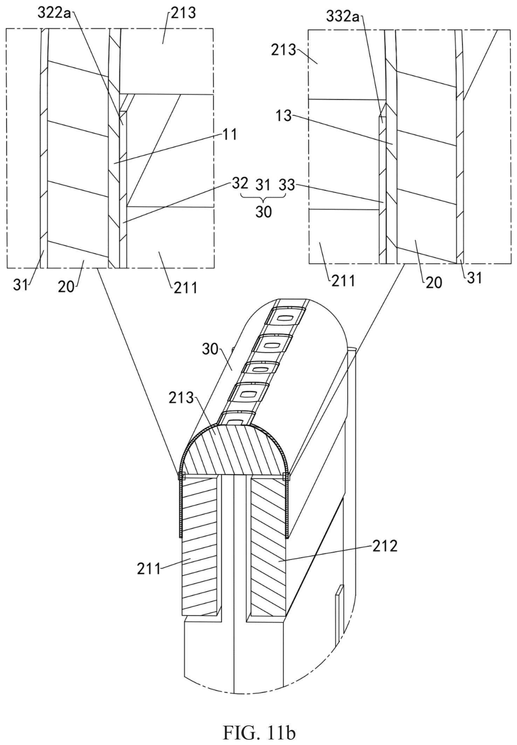

FIG. 10 is a diagram of a partial structure of the electronic device 1000 shown in FIG. 1. FIG. 11a is a diagram of a partial cross-sectional structure in an implementation in which a partial structure of the electronic device 1000 shown in FIG. 1 is cut along A-A. FIG. 11b is a diagram of a partial cross-sectional structure in an implementation in which a partial structure of the electronic device 1000 shown in FIG. 2 is cut along B-B.

As shown in FIG. 10 to FIG. 11b, the second portion 12 of the first support member 10 may be fastened to the flat surface 213a of the main shaft portion 213 of the hinge assembly 210 through welding, bonding, or the like. In this case, the second portion 12 of the first support member 10 may be fastened to the main shaft portion 213 of the hinge assembly 210. A length of the first support member 10 may be slightly shorter than a length of the hinge assembly 210.

When the electronic device 1000 is in the unfolded state, the width of the first support member 10 is a third width L3. The third width L3 may be less than or equal to the first width L1. The third width L3 may alternatively be greater than the second width L2. In this case, the first portion 11 of the first support member 10 and the first extension portion 322 of the first bending portion 32 of the lubricating member 30 may lap over the first connection portion 211 of the hinge assembly 210, and the third portion 13 of the first support member 10 and the second extension portion 332 of the second bending portion 33 of the lubricating member 30 may lap over the second connection portion 212 of the hinge assembly 210. When the electronic device 1000 is in the folded state, the first portion 11 of the first support member 10 and the first extension portion 322 of the first bending portion 32 of the lubricating member 30 may lap over the first connection portion 211 of the hinge assembly 210, and the third portion 13 of the first support member 10 and the second extension portion 332 of the second bending portion 33 of the lubricating member 30 may lap over the second connection portion 212 of the hinge assembly 210. The first end 322c of the first extension portion 322 of the lubricating member 30 may be located in a gap between the main shaft portion 213 and the first connection portion 211 of the hinge assembly 210. The second end 332c of the second extension portion 332 of the lubricating member 30 may be located in the gap between the main shaft portion 213 and the first connection portion 211 of the hinge assembly 210. In this way, the width of the first support member 10 (namely, the third width L3) may be less than the width of the hinge assembly 210 (namely, the first width L1), and the first support member 10 is narrow. This helps reduce a rebound force of the first support member 10 during bending, and improve unfolding and folding experience of the electronic device 1000. In addition, when the electronic device 1000 is in the unfolded state, the width of the first support member 10 may be greater than a distance between the first connection portion 211 and the second connection portion 212 of the hinge assembly 210 (namely, the second width L2). Therefore, regardless of whether the electronic device 1000 in this implementation is in the unfolded state or the folded state, the first support member 10 can cover, in the thickness direction of the electronic device 1000, a part of a gap between the main shaft portion 213 and the first connection portion 211 of the hinge assembly 210 and a part of a gap between the main shaft portion 213 and the second connection portion 212 of the hinge assembly 210, to avoid a case that unfolding and folding of the electronic device 1000 are affected because an outer edge of the first support member 10 interferes with the hinge assembly 210 because the outer edge of the first support member 10 is located in a gap of the hinge assembly 210. In addition, the first support member 10 can lap over the first connection portion 211 and the second connection portion 212. This helps provide a flat support environment for subsequent component fastening and assembling. In some implementations, when the electronic device 1000 is in the folded state, the first end 322c of the first extension portion 322 of the lubricating member 30 may further lap over the first connection portion 211 or the main shaft portion 213.

For example, the first portion 11 of the first support member 10 may lap over the first connection portion 211 of the hinge assembly 210 through the first bending portion 32 of the lubricating member 30, and may move relative to the first connection portion 211. The third portion 13 of the first support member 10 may lap over the second connection portion 212 of the hinge assembly 210 through the second bending portion 33 of the lubricating member 30, and may move relative to the second connection portion 212. In this way, when the electronic device 1000 is bent, the first portion 11 of the first support member 10 and the first bending portion 32 of the lubricating member 30 may move relative to the first connection portion 211 of the hinge assembly 210, and the third portion 13 of the first support member 10 and the second bending portion 33 of the lubricating member 30 may move relative to the second connection portion 212 of the hinge assembly 210. Because a friction coefficient between the lubricating member 30 and the hinge assembly 210 is less than a friction coefficient between the first support member 10 and the hinge assembly 210, scratching caused when the first support member 10 moves and directly contacts the hinge assembly 210 can be effectively avoided, to reduce abnormal noise caused when the electronic device 1000 is bent.

In this implementation, the second portion 12 of the first support member 10 may be fastened to the main shaft portion 213 through welding. For example, a welding torch may weld the first support member 10 to the flat surface 213a of the hinge assembly 210 at a part of a surface that is of the first support member 10 and that is exposed from one or more glue holes 20a. In this case, a welding spot 10a between the first support member 10 and the hinge assembly 210 may be located on the flat surface 213a of the main shaft portion 213. The welding spot 10a may be exposed relative to the glue hole 20a. The welding spot 10a may be spaced from a second through hole 14 of the first support member 10. It should be understood that a position of the welding spot 10a is indicated by using a dashed circle in each of FIG. 10 and FIG. 11a.

It may be understood that, in comparison with that the first support member 10 is fastened to the main shaft portion 213 of the hinge assembly 210 through bonding, and the first support member 10 and the hinge assembly 210 are degummed during unfolding and folding of the electronic device 1000 or when the electronic device 1000 is in some extreme environments, causing problems such as screen 300 bulging and routing breakage of the screen 300, in this implementation, the first support member 10 may be fastened to the main shaft portion 213 of the hinge assembly 210 through welding, so that the first support member 10 can be more stably fastened to the hinge assembly 210. In this way, even if the electronic device 1000 is unfolded and folded a plurality of times, or the electronic device 1000 is in some extreme environments, the first support member 10 can still be fastened to the hinge assembly 210, to effectively avoid problems of screen 300 bulging and routing breakage caused by detachment of the first support member 10. This helps improve overall structural stability of the electronic device 1000 and prolong a service life of the electronic device 1000.

In addition, in comparison with sequentially stacking and fastening the first support member 10, the first elastic member 20, and the lubricating member 30 to the hinge assembly 210, in this implementation, the first support member 10, the first elastic member 20, and the lubricating member 30 are first assembled into an integrated structure, and then the integrated structure is fastened to the hinge assembly 210. In this way, in one aspect, a case that unfolding and folding experience of the electronic device 1000 is affected because some components are adhered to each other due to overflow of an adhesive to the housing apparatus 200 of the electronic device 1000 during fastening of the first elastic member 20 and during fastening of the lubricating member 30 can be effectively avoided. In another aspect, both the first support member 10 and the first elastic member 20 are of flat sheet structures, so that the first elastic member 20 and the lubricating member 30 can be assembled in a flat support environment during bonding and fastening, and the first support member 10, the first elastic member 20, and the lubricating member 30 are easier to be assembled. In addition, this also helps reduce bubbles in adhesives between the first support member 10, the first elastic member 20, and the lubricating member 30, to improve stability of connections between the first support member 10, the first elastic member 20, and the lubricating member 30, and effectively avoid a case that the first elastic member 20 and the lubricating member 30 are degummed and delaminated at the bubbles due to a plurality of times of unfolding and folding of the electronic device 1000. This helps improve overall structural stability of the electronic device 1000 and prolong the service life of the electronic device 1000.

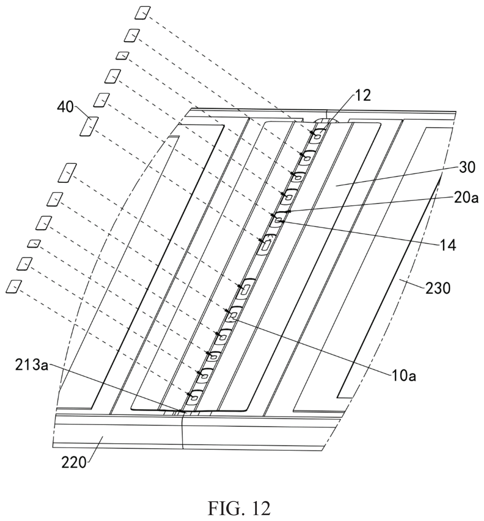

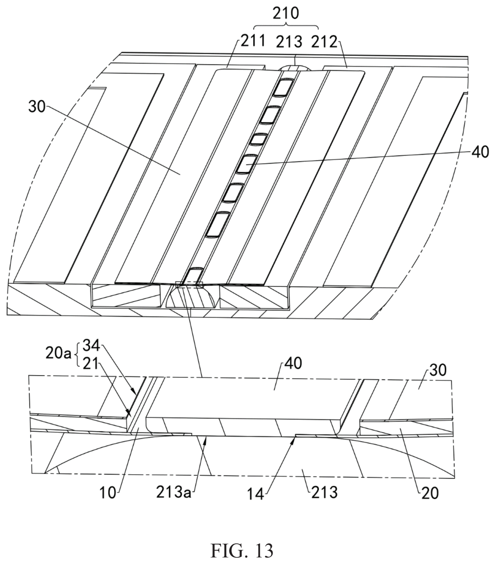

FIG. 12 is a diagram of a partial structure of the electronic device 1000 shown in FIG. 1. FIG. 13 is a diagram of a partial cross-sectional structure in an implementation in which a partial structure of the electronic device 1000 shown in FIG. 1 is cut along A-A.

As shown in FIG. 12 and FIG. 13, the first elastic member 20 may be provided with a plurality of first through holes 21. The plurality of first through holes 21 may be spaced from each other in a length extension direction of the first elastic member 20. Shapes and sizes of the plurality of first through holes 21 may not be completely the same. The second portion 12 of the first support member 10 may be provided with a plurality of second through holes 14. The plurality of second through holes 14 may be spaced from each other in a length extension direction of the first support member 10. Shapes and sizes of the plurality of second through holes 14 may not be completely the same. The second through hole 14 may expose a part of the flat surface 213a of the main shaft portion 213. For example, a quantity of first through holes 21 may be the same as a quantity of second through holes 14. The plurality of first through holes 21 may respectively expose the plurality of second through holes 14, and communicate with the plurality of second through holes 14. In this case, the first through hole 21 may also expose the part of the flat surface 213a of the main shaft portion 213.

For example, in each group of second through holes 14 and first through holes 21, an opening size of the second through hole 14 may be not greater than an opening size of the first through hole 21. In this case, in the thickness direction of the electronic device 1000, the first through hole 21 and the second through hole 14 may at least partially overlap. In this implementation, in each group of second through holes 14 and first through holes 21, the opening size of the second through hole 14 may be less than the opening size of the first through hole 21. In this case, the plurality of first through holes 21 may further respectively expose parts of the upper surface of the first support member 10 around the plurality of second through holes 14, for example, expose parts of an upper surface of the second portion 12 of the first support member 10. In another implementation solution, in each group of second through holes 14 and first through holes 21, the opening size of the second through hole 14 may be equal to the opening size of the first through hole 21. In this case, the plurality of first through holes 21 may expose only the part of the flat surface 213a of the main shaft portion 213.

For example, the lubricating member 30 may be provided with a plurality of third through holes 34. The plurality of third through holes 34 may be spaced from each other in a length extension direction of the lubricating member 30. Shapes and sizes of the plurality of third through holes 34 may not be completely the same. For example, a quantity of third through holes 34 may be the same as the quantity of first through holes 21. The plurality of third through holes 34 may respectively expose the plurality of first through holes 21, and communicate with the plurality of first through holes 21. In this case, the plurality of third through holes 34 may respectively form a plurality of glue holes 20a with the plurality of first through holes 21. In each group of third through holes 34 and first through holes 21, the third through hole 34 and the first through hole 21 may have approximately same shapes and sizes, in other words, an opening size of the third through hole 34 may be the same as an opening size of the first through hole 21 in the same group. In this case, the plurality of third through holes 34 may further respectively expose the parts of the upper surface of the first support member 10 exposed by the plurality of second through holes 14 and the plurality of first through holes 21. In other words, the plurality of glue holes 20a may respectively expose the parts of the upper surface of the first support member 10 exposed by the plurality of second through holes 14 and the plurality of first through holes 21. It should be noted that FIG. 6 to FIG. 10 also show the first through hole 21, the second through hole 14, and the third through hole 34.

As shown in FIG. 12 and FIG. 13, the first adhesive 40 may be in a block shape. There may be a plurality of first adhesives 40. The plurality of first adhesives 40 may have a same thickness. A quantity of first adhesives 40 may be the same as a quantity of glue holes 20a. The plurality of first adhesives 40 may be respectively located in the plurality of glue holes 20a and the plurality of second through holes 14. In this case, each first adhesive 40 may be approximately in an inverted "convex" shape. One part of the first adhesive 40 may be located in the second through hole 14, and is connected to the flat surface 213a of the hinge assembly 210 and a peripheral side wall of the second through hole 14 (namely, the first support member 10). The other part of the first adhesive 40 may be located in the glue hole 20a, and is connected to a part that is of the upper surface of the first support member 10 and that is exposed from the glue hole 20a. For example, the first adhesives 40 may be hot melt adhesives. The hot melt adhesives may be filled in the glue holes 20a, and may respectively flow into the plurality of second through holes 14 before being cured. After the hot melt adhesives are cured, the first adhesive 40 in an inverted "convex" shape may be formed.

In some implementations, sizes of the second through holes 14 may not be completely the same. For example, a length of one or more second through holes 14 located at an intermediate position in the plurality of second through holes 14 may be slightly greater than lengths of remaining second through holes 14. Separation distances between any two adjacent second through holes 14 may not be completely the same. A length extension direction of the second through hole 14 is the same as the length extension direction of the first support member 10. In this way, when a length of each second through hole 14 is changed and a spacing between two adjacent second through holes 14 is changed, so that the first support member 10 is subsequently fastened to the hinge assembly 210, each second through hole 14 may avoid an uneven structure in the main shaft portion 213 of the hinge assembly 210, to facilitate subsequent mounting and fastening of another component (refer to FIG. 4).

In another implementation, the first elastic member 20 may be provided with only one first through hole 21, and the lubricating member 30 may be provided with only one third through hole 34. The first through hole 21 may be a long-bar-shaped through hole, and exposes all the second through holes 14 and the parts of the upper surface of the first support member 10 around the second through holes 14. The third through hole 34 may have a same shape and size as the first through hole 21, and expose the first through hole 21. In this case, the first through hole 21 and the third through hole 34 may jointly form a long-bar-shaped glue hole 20a. There may alternatively be one first adhesive 40. In this case, the first adhesive 40 may be in a long-bar shape, and adapt to a shape of the glue hole 20a. The long-bar-shaped first adhesive 40 may fill both the long-bar-shaped glue hole 20a and the plurality of second through holes 14.

In some other implementations, the quantity of first through holes 21 may alternatively be unequal to the quantity of third through holes 34. In this case, the plurality of first through holes 21 and the plurality of third through holes 34 may be in a two-to-one relationship. For example, one third through hole 34 may correspondingly expose two first through holes 21. Alternatively, the plurality of first through holes 21 and the plurality of third through holes 34 may be in a three-to-one, one-to-two, two-to-three, or the like relationship. In other words, there are a plurality of combinations between the plurality of first through holes 21 and the plurality of third through holes 34. This is not specifically limited in this application.

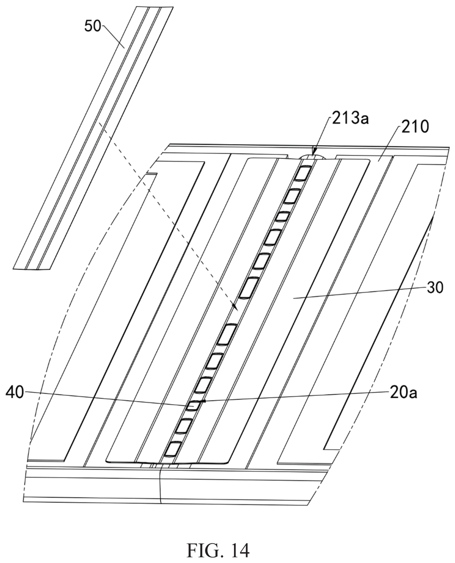

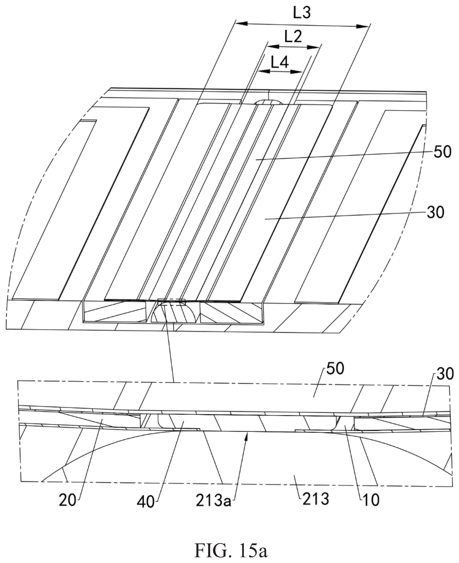

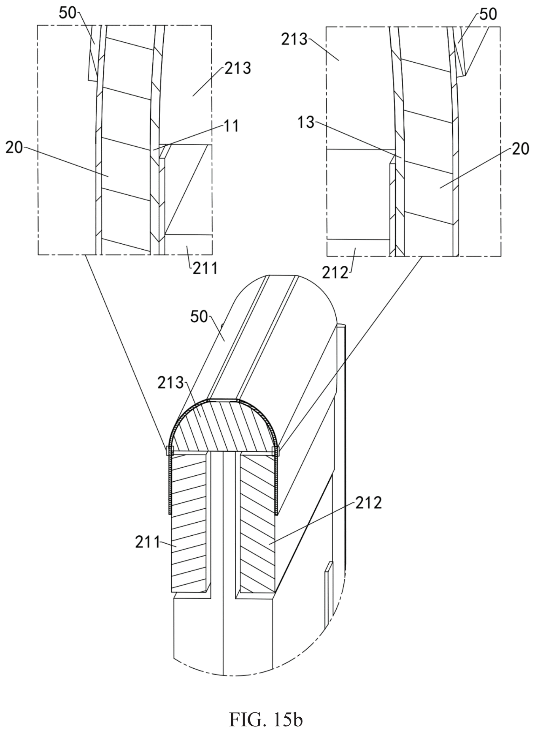

FIG. 14 is a diagram of a partial structure of the electronic device 1000 shown in FIG. 1. FIG. 15a is a diagram of a partial cross-sectional structure in an implementation in which a partial structure of the electronic device 1000 shown in FIG. 1 is cut along A-A. FIG. 15b is a diagram of a partial cross-sectional structure in an implementation in which a partial structure of the electronic device 1000 shown in FIG. 2 is cut along B-B.

As shown in FIG. 14 to FIG. 15b, the second support member 50 may be made of a rigid material with specific strength and hardness. The second support member 50 may be in a thin sheet shape. For example, the second support member 50 may be a steel sheet. The second support member 50 can be bent under an external force. Certainly, when a support performance requirement is satisfied, the second support member 50 may alternatively be a metal sheet or a non-metal sheet like an aluminum sheet or a stainless steel sheet. This is not strictly limited in this application. A length of the second support member 50 may be slightly shorter than the length of the hinge assembly 210.

For example, the second support member 50 may be located above the lubricating member 30. The second support member 50 may be fastened to the first adhesive 40. In this case, the second support member 50 may be fastened to the flat surface 213a of the main shaft portion 213 of the hinge assembly 210 through the first adhesive 40. All parts of the second support member 50 other than a part fastened to the first adhesive 40 may lap over the lubricating member 30, and can move relative to the lubricating member 30. When the electronic device 1000 is in the unfolded state, a width of the second support member 50 is a fourth width L4. The fourth width L4 may be less than or equal to the third width L3. For example, the fourth width L4 may be less than or equal to the second width L2. In this case, the second support member 50 and the first connection portion 211 of the hinge assembly 210 do not overlap in the thickness direction of the electronic device 1000. The second support member 50 and the second connection portion 212 of the hinge assembly 210 also do not overlap in the thickness direction of the electronic device 1000. When the electronic device 1000 is in the folded state, the second support member 50 and the first connection portion 211 of the hinge assembly 210 do not overlap in the thickness direction of the electronic device 1000. The second support member 50 and the second connection portion 212 of the hinge assembly 210 also do not overlap in the thickness direction of the electronic device 1000. In this way, the second support member 50 is narrow, so that a rebound force of the second support member 50 during bending can be effectively reduced, and the electronic device 1000 can be unfolded and folded more smoothly. This helps enhance user experience.

It may be understood that, in this implementation, the first elastic member 20 is provided with the first through hole 21, the first support member 10 is provided with the second through hole 14, and the lubricating member 30 is provided with the third through hole 34, so that the first adhesive 40 can be located in the through holes and can contact the flat surface 213a of the hinge assembly 210. In this way, in one aspect, the second support member 50 can be directly fastened to the flat surface 213a of the hinge assembly 210 through the first adhesive 40. This helps improve connection stability of the second support member 50. In another aspect, the first adhesive 40 can use a thickness space of the first support member 10, the first elastic member 20, and the lubricating member 30, so that the second support member 50 can be fastened without increasing a thickness of the elastic component 100. This helps implement a thin design of the electronic device 1000. In addition, the through holes (namely, the second through hole 14, the first through hole 21, and the third through hole 34 in this implementation) on the first support member 10, the first elastic member 20, and the lubricating member 30 may be used to control a thickness of the first adhesive 40, to avoid a problem that connection stability of the second support member 50 cannot be ensured because the first adhesive 40 is excessively thin, and avoid a problem that the screen 300 is uneven because the first adhesive 40 is excessively thick.

In addition, in this implementation, an opening of the second through hole 14 of the first support member 10 may not be larger than an opening of the first through hole 21 of the first elastic member 20. When the opening of the second through hole 14 is equal to the opening of the first through hole 21, the second through hole 14 may further expose the part of the main shaft portion 213 exposed by the first through hole 21, so that the first adhesive 40 can fasten the second support member 50 to the hinge assembly 210, to help improve structural stability of the entire elastic component 100. When the opening of the second through hole 14 is smaller than the opening of the first through hole 21, the first through hole 21 may further expose a part of the upper surface of the first support member 10. In this way, when the second support member 50 is fastened by the first adhesive 40, the opening of the second through hole 14 is small, and the second through hole 14 exposes only a part of the flat surface 213a of the hinge assembly 210, so that the first adhesive 40 does not overflow from the second through hole 14 to other components of the hinge assembly 210 when the first adhesive 40 fastens the second support member 50 to the hinge assembly 210. This can effectively avoid a problem that other components are adhered to each other due to overflow of the first adhesive 40. In addition, the opening of the first through hole 21 is larger than the opening of the second through hole 14, so that the second support member 50 can be fastened to the upper surface of the first support member 10 by the first adhesive 40 while being directly fastened to the hinge assembly 210 by the first adhesive 40, to increase a fastening area between the first adhesive 40 and the first support member 10. This can effectively improve stability of a connection between the second support member 50 and the hinge assembly 210, and also improve stability of a connection between the second support member 50 and the first support member 10, to help improve overall structural stability of the electronic device 1000.

In another implementation, the first support member 10 may alternatively not be provided with the second through hole 14. In this case, the first through hole 21 of the first elastic member 20 may expose only a part of the surface of the first support member 10. The second support member 50 may be fastened, through the first adhesive 40, to the part that is of the surface of the first support member 10 and that is exposed by the first through hole 21.

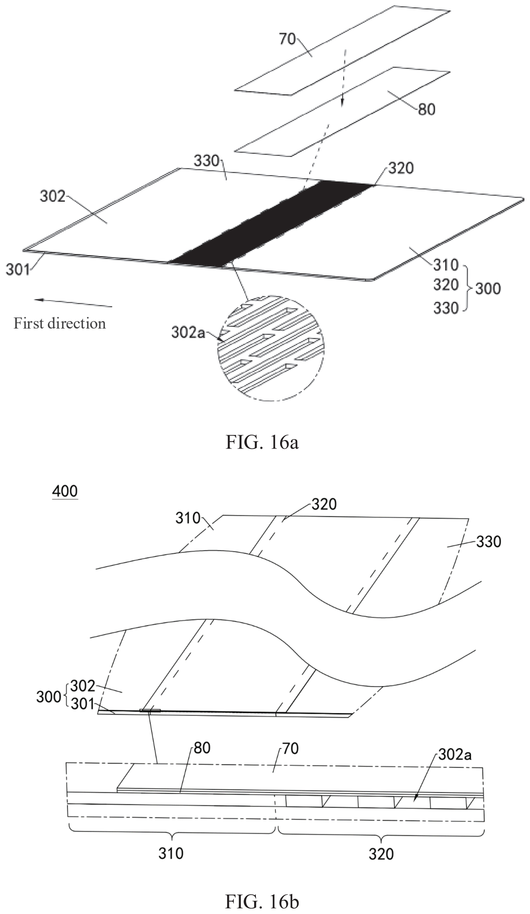

FIG. 16a is a diagram of an exploded structure obtained after the screen 300, the second elastic member 70, and the third adhesive 80 of the electronic device 1000 shown in FIG. 3 are flipped up and down. FIG. 16b is a diagram of an assembled structure of the screen 300, the second elastic member 70, and the third adhesive 80 shown in FIG. 16a.

As shown in FIG. 16a and FIG. 16b, the screen 300 may include a flexible display 301 and a bearing plate 302 configured to support the flexible display 301. The bearing plate 302 may be located on a non-display side of the flexible display 301, and is fastened to the flexible display 301 (FIG. 3 also shows the flexible display 301 and the bearing plate 302 of the screen 300). The flexible display 301 may be bent, and the bearing plate 302 may be bent and has specific structural strength, so that the screen 300 can implement both an unfolding action and a folding action, and can have specific structural strength, thereby having high structural reliability.

For example, the screen 300 may include a first portion 310, a second portion 320, and a third portion 330. The second portion 320 may be connected between the first portion 310 and the third portion 330. When the screen 300 is unfolded, the first portion 310, the second portion 320, and the third portion 330 may be sequentially arranged in the first direction. It should be noted that the first portion 310, the second portion 320, and the third portion 330 of the screen 300 are schematically shown through division by using dashed lines in both FIG. 16a and FIG. 16b. For ease of understanding, a volume of the second portion 320 indicated by the dashed line is slightly greater than a volume of an actual second portion 320.

For example, a part that is of the bearing plate 302 and that is located in the second portion 320 may be provided with a plurality of bar-shaped holes 302a. Extension directions of the plurality of bar-shaped holes 302a may be the same. A length extension direction of the plurality of bar-shaped holes 302a may be the same as the length extension direction of the hinge assembly 210. In this way, the plurality of the bar-shaped holes 302a can effectively reduce stiffness of the part that is of the bearing plate 302 and that is located in the second portion 320. When the electronic device 1000 is bent, the part that is of the bearing plate 302 and that is located in the second portion 320 can be better bent, to help improve unfolding and folding experience of the electronic device 1000. In some implementations, a part that is of the bearing plate 302 and that is located in the first portion 310 and close to the second portion 320 may also be provided with a plurality of bar-shaped holes 302a. A part that is of the bearing plate 302 and that is located in the third portion 330 and close to the second portion 320 may also be provided with a plurality of bar-shaped holes 302a. In this way, two sides of the second portion 320 of the screen 300 may also be provided with bar-shaped holes 302a, so that a rebound force of the second portion 320 during bending can be better reduced, to help improve unfolding and folding experience of the electronic device 1000. In some implementations, to reduce the rebound force of the second portion 320 during bending and improve unfolding and folding experience of the electronic device 1000, the two sides of the second portion 320 may also be provided with a bar-shaped groove. A length extension direction of the bar-shaped groove may be the same as the length extension direction of the hinge assembly 210.

As shown in FIG. 16a and FIG. 16b, a material of the second elastic member 70 may be an elastic material or a non-Newtonian fluid material. A thickness of the second elastic member 70 may be greater than or equal to a thickness of the second support member 50 (refer to FIG. 15a). The thickness of the second elastic member 70 may range from 0.02 millimeters to 0.15 millimeters. For example, the thickness of the first elastic member 20 may be 0.03 millimeters, 0.042 millimeters, 0.075 millimeters, 0.1 millimeters, 0.12 millimeters, or the like.

For example, the second elastic member 70 may be fastened, through the third adhesive 80, to a surface that is of the bearing plate 302 and that faces away from the flexible display 301. In this case, the second elastic member 70 and the screen 300 may be respectively located on two sides that are of the third adhesive 80 and that face away from each other. The screen 300, the second elastic member 70, and the third adhesive 80 may be assembled together to jointly form a screen assembly 400. The second elastic member 70 and the third adhesive 80 may have a same shape and a same size. The second elastic member 70 may be approximately rectangular. A width of the second elastic member 70 may be greater than or equal to a width of the second portion 320 of the screen 300. In this case, the second elastic member 70 may overlap the second portion 320 of the screen 300 in the thickness direction of the electronic device 1000, in other words, the third adhesive 80 may also overlap the second portion 320 of the screen 300 in the thickness direction of the electronic device 1000. When the electronic device 1000 is in the unfolded state, the second elastic member 70 may further cover the plurality of bar-shaped holes 302a of the bearing plate 302 in the thickness direction of the electronic device 1000, in other words, the third adhesive 80 may cover the plurality of bar-shaped holes 302a of the bearing plate 302 in the thickness direction of the electronic device 1000. In this way, the second elastic member 70 and the third adhesive 80 can enhance stiffness of a part that is of the bearing plate 302 and that is provided with the bar-shaped hole 302a (namely, the part that is of the bearing plate 302 and that is located in the second portion 320 in this implementation), to effectively avoid a problem that the part that is of the bearing plate 302 and that is provided with the bar-shaped hole 302a bulges and the second portion 320 of the screen 300 bulges when the electronic device 1000 drops in the unfolded state. This helps improve overall structural strength of the screen 300 and prolong the service life of the screen 300.

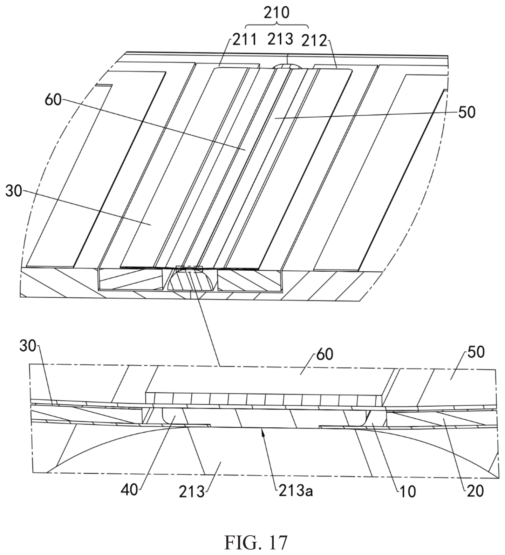

FIG. 17 is a diagram of a partial cross-sectional structure in an implementation in which a partial structure of the electronic device 1000 shown in FIG. 1 is cut along A-A.

As shown in FIG. 17, the second adhesive 60 may be approximately in a long-bar shape. The second adhesive 60 may be located above the second support member 50, and is fastened to the second support member 50. The second adhesive 60 may be an adhesive having a specific deformation capability, for example, a hot melt adhesive. For example, a projection of the second adhesive 60 in the thickness direction of the electronic device 1000 may at least partially overlap the flat surface 213a of the hinge assembly 210. A width of the second adhesive 60 may be less than the width of the second support member 50.

For example, the width of the second adhesive 60 may be less than or equal to an opening width of the first through hole 21 of the first elastic member 20. In this way, most part of the second adhesive 60 may be located right above the main shaft portion 213 of the hinge assembly 210, and the second adhesive 60 is narrow. This can effectively reduce a rebound force of the second adhesive 60 during bending, and helps improve unfolding and folding experience of the electronic device 1000.

In some implementations, the width of the second adhesive 60 may be equal to a width of the flat surface 213a of the hinge assembly 210. Being equal may be completely equal, or may be approximately equal. For example, the width of the second adhesive 60 may be slightly greater than or slightly less than the width of the flat surface 213a.

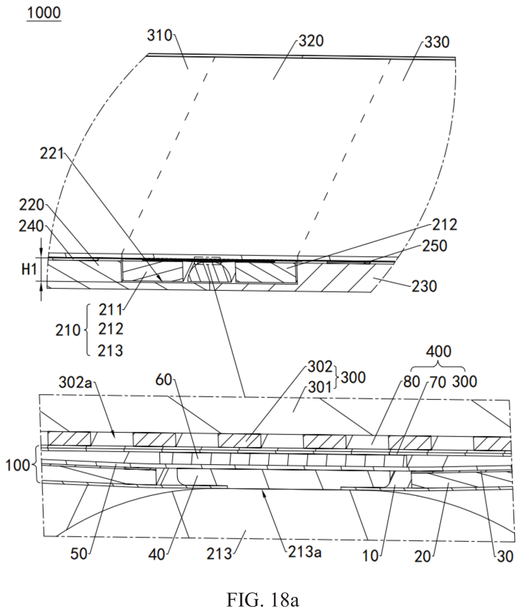

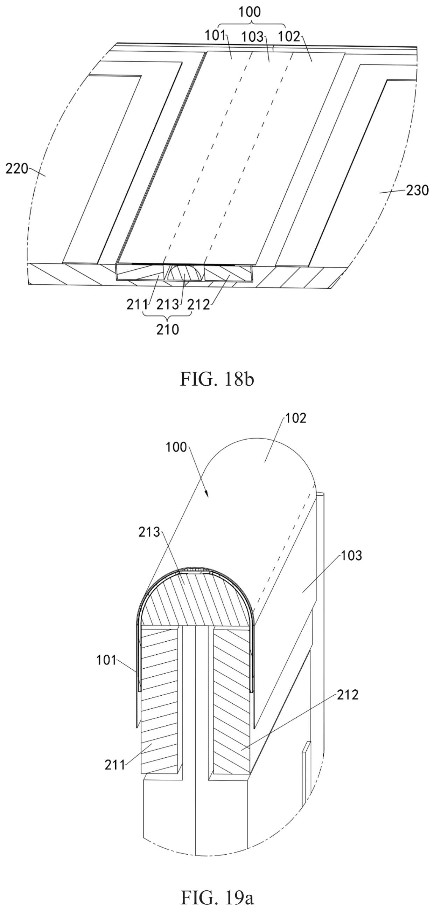

FIG. 18a is a diagram of a partial cross-sectional structure in an implementation in which the electronic device 1000 shown in FIG. 1 is cut along A-A. FIG. 18b is a diagram of a partial cross-sectional structure in an implementation in which a partial structure of the electronic device 1000 shown in FIG. 1 is cut along A-A. In comparison with FIG. 18a, the screen 300 is hidden in FIG. 18b.

As shown in FIG. 17 to FIG. 18b, the first portion 310 of the screen 300 may be located above the first housing 220, and is fastened to the first adhesive 240. The third portion 330 of the screen 300 may be located above the second housing 230, and is fastened to the second adhesive 250. FIG. 4 shows the first adhesive 240 and the second adhesive 250 from another perspective. In this case, the flexible display 301 may be located on a side that is of the bearing plate 302 and that faces away from the hinge assembly 210. A surface that is of the second elastic member 70 and that faces away from the third adhesive 80 may be fastened to the second adhesive 60. When the electronic device 1000 is in the unfolded state, the second portion 320 of the screen 300, the elastic component 100, and the hinge assembly 210 may be stacked in the thickness direction of the electronic device 1000.

For example, the elastic component 100 may include a first portion 101, a second portion 102, and a third portion 103. The third portion 103 may be connected between the first portion 101 and the second portion 102. When the electronic device 1000 is in the unfolded state, the first portion 101, the third portion 103, and the second portion 102 may be sequentially arranged in the first direction. The first portion 101 of the elastic component 100 may lap over the first connection portion 211 of the hinge assembly 210. The second portion 102 of the elastic component 100 may lap over the second connection portion 212 of the hinge assembly 210. The third portion 103 of the elastic component 100 may be fastened to the main shaft portion 213 of the hinge assembly 210. It should be understood that the first portion 101, the second portion 102, and the third portion 103 of the elastic component 100 are schematically shown through division by using dashed lines in FIG. 18b.

It may be understood that, in comparison with sequentially stacking and fastening the second elastic member 70, the third adhesive 80, and the screen 300 to the second adhesive 60, in this implementation, the second elastic member 70, the third adhesive 80, and the screen 300 are first assembled to form the screen assembly 400, and then the entire screen assembly 400 is fastened to the second adhesive 60. In this way, the screen 300 can provide a flat support environment during assembly of the second elastic member 70 and the third adhesive 80, so that the second elastic member 70 and the third adhesive 80 are more easily assembled on the screen 300. In addition, this helps reduce bubbles in the third adhesive 80, to effectively improve stability of a connection between the second elastic member 70, the third adhesive 80, and the screen 300, and effectively avoid a problem that the second elastic member 70 and the third adhesive 80 or the screen 300 and the third adhesive 80 are degummed and delaminated at the bubbles due to a plurality of times of unfolding and folding of the electronic device 1000. This helps improve overall structural stability of the electronic device 1000 and prolong the service life of the electronic device 1000. In other words, the screen assembly 400 in this implementation may include at least one elastic member.

In another implementation, the second support member 50 and the second adhesive 60 may be first assembled with the screen 300, the second elastic member 70, and the third adhesive 80 to form the screen assembly 400. Then, the entire screen assembly 400 is fastened to another component of the electronic device 1000. In other words, the screen assembly 400 in this implementation may further include at least one support member.

Still refer to FIG. 18a and FIG. 18b. When the electronic device 1000 is in the unfolded state, both the screen 300 and the elastic component 100 may be unfolded relative to each other under driving of the housing apparatus 200. The first support member 10, the first elastic member 20, the second support member 50, and the second elastic member 70 may all be located above the flat surface 213a of the hinge assembly 210, and are sequentially arranged in a direction from the housing apparatus 200 to the screen 300.

For example, at least a part of the elastic component 100 may be located in the first mounting groove 221, that is, located in the accommodation space 200a (refer to FIG. 4). A sum of the thickness of the elastic component 100 and the thickness of the hinge assembly 210 may be equal to the first distance H1. In other words, a surface that is of the elastic component 100 and that faces away from the hinge assembly 210 (namely, a surface that is of the third adhesive 80 and that faces away from the hinge assembly 210 in this implementation) may be flush with the upper surface of the first adhesive 240. It should be noted that, that the sum of the thickness of the elastic component 100 and the thickness of the hinge assembly 210 may be equal to the first distance H1 may be understood as being completely equal or approximately equal. In other words, the first distance H1 and the sum of the thickness of the elastic component 100 and the thickness of the hinge assembly 210 may have a specific discrepancy. For example, the discrepancy may be within a range of plus or minus 0.1 millimeters.

The first elastic member 20 and the second elastic member 70 may jointly form the elastic portion of the elastic component 100. A total thickness of the elastic portion may range from 0.2 millimeters to 0.4 millimeters. The first support member 10 and the second support member 50 may jointly form the support portion of the elastic component 100. A total thickness of the support portion may be less than or equal to the total thickness of the elastic portion.

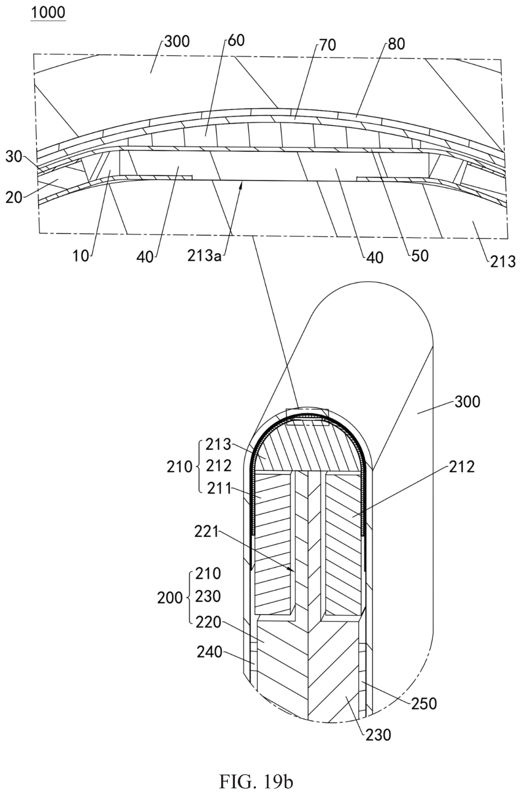

FIG. 19a is a diagram of a partial cross-sectional structure in an implementation in which a partial structure of the electronic device 1000 shown in FIG. 2 is cut along B-B. FIG. 19b is a diagram of a partial cross-sectional structure in an implementation in which the electronic device 1000 shown in FIG. 2 is cut along B-B.

As shown in FIG. 19a and FIG. 19b, when the electronic device 1000 is in the folded state, both the screen 300 and the elastic component 100 may be folded relative to each other under driving of the housing apparatus 200. The second portion 320 of the screen 300 may be bent into an arc shape. The elastic component 100 may be located between the second portion 320 of the screen 300 and the main shaft portion 213 of the housing apparatus 200. The first portion 101 of the elastic component 100 may lap over the first connection portion 211 of the hinge assembly 210. The second portion 102 of the elastic component 100 may lap over the second connection portion 212 of the hinge assembly 210.

The second adhesive 60 of the elastic component 100 may be deformed to an extent under squeezing of the screen 300. The left and right sides of the second adhesive 60 are compressed in a direction close to the hinge assembly 210, so that a surface that is of the second adhesive 60 and that faces away from the hinge assembly 210 may be bent into an arc shape, to better fit the bent screen 300. In this way, the elastic component 100 can provide a smoother support environment for the screen 300. In some implementations, the left and right sides of the first adhesive 40 may also be compressed in the direction close to the hinge assembly 210, so that a surface that is of the first adhesive 40 and that faces away from the hinge assembly 210 may be bent into an arc shape, to better fit the bent screen 300.

It may be understood that, compared with a conventional electronic device that compromises a thickness of a screen to improve overall structural reliability of the screen, resulting in a high overall thickness of the electronic device and a large rebound force during bending, the electronic device 1000 in this implementation is provided with the elastic component 100 between the screen 300 and the main shaft portion 213 of the hinge assembly 210. The elastic component 100 may include the support portion and the elastic portion. The material of the support portion may be the rigid material, and the material of the elastic portion may be the elastic material or the non-Newtonian fluid material. When the electronic device 1000 is in the folded state, the hinge assembly 210 may be located on the inner side of the screen 300, and the elastic component 100 may be fastened between the second portion 320 of the screen 300 and the main shaft portion 213 of the hinge assembly 210. When the electronic device 1000 is in the unfolded state, the screen 300, the elastic component 100, and the hinge assembly 210 may be stacked in the thickness direction of the electronic device 1000. In this way, when the electronic device 1000 drops, especially when the electronic device 1000 drops in the folded state, the support portion of the elastic component 100 can well absorb an impact force and/or a squeezing force of the hinge assembly 210 on the screen 300, reduce the impact force on the screen 300, and provide good rigid support for the screen 300. The elastic portion of the elastic component 100 can have a good elastic effect on the impact force and/or the squeezing force on the screen 300, and the elastic portion can also absorb and disperse the impact force and/or the squeezing force on the screen 300. The elastic component 100 can effectively absorb the impact force on the second portion 320 of the screen 300 caused by a drop, and avoid a problem that the screen 300 generates a bright spot and a black spot due to a strong collision between the second portion 320 of the screen 300 and the hinge assembly 210. This helps improve structural reliability of the screen 300 and prolong the service life of the screen 300. In other words, drop reliability of the screen 300 in this implementation can be effectively improved through the elastic component 100 located between the screen 300 and the hinge assembly 210 without compromising the thickness of the screen 300. In addition, an overall thickness of the screen 300 is low, so that a rebound force of the electronic device 1000 during bending can be effectively reduced, to help improve unfolding and folding experience of the user.

In addition, the support portion of the elastic component 100 may include at least one support member (namely, the first support member 10 in this implementation). The elastic portion of the elastic component 100 may include at least one elastic member (namely, the first elastic member 20 in this implementation). A material of the first support member 10 may be a rigid material, and a material of the first elastic member 20 may be an elastic material or a non-Newtonian fluid material. In this way, when the electronic device 1000 drops and the second portion 320 of the screen 300 is impacted, the first support member 10 can well absorb the impact force and/or the squeezing force of the hinge assembly 210 on the second portion 320 of the screen 300, reduce the impact force on the screen 300, and provide good rigid support for the screen 300. The first elastic member 20 can have a good elastic effect on the impact force and/or the squeezing force on the screen 300, and can absorb and disperse the impact force and/or the squeezing force on the screen 300. In other words, the elastic component 100 in this implementation includes both the first support member 10 and the first elastic member 20. The first support member 10 and the first elastic member 20 respectively provide good rigid protection and elastic protection for the screen 300. The entire elastic component 100 has a good impact resistance capability and a good squeezing resistance capability, so that the elastic component 100 can better protect the screen 300, improve drop reliability of the screen 300, and help prolong the service life of the screen 300.

In addition, the elastic component 100 in this implementation may further include the second support member 50 and the second elastic member 70. The first support member 10, the first elastic member 20, the second support member 50, and the second elastic member 70 may be sequentially arranged in the direction from the hinge assembly 210 to the screen 300 in a stacked manner. The first support member 10 and the second support member 50 may jointly form the support portion of the elastic component 100. The first elastic member 20 and the second elastic member 70 may jointly form the elastic portion of the elastic component 100. In this way, the plurality of support members (namely, the first support member 10 and the second support member 50 in this implementation) and the plurality of elastic members (namely, the first elastic member 20 and the second elastic member 70 in this implementation) in the elastic component 100 are alternately stacked, so that the entire elastic component 100 can form a structure similar to a bulletproof vest. This helps improve an impact resistance capability and a squeezing resistance capability of the elastic component 100. In comparison with directly increasing the thickness of the first support member 10 and the thickness of the first elastic member 20 to improve the impact resistance capability and the squeezing resistance capability of the elastic component 100, in this implementation, the elastic component 100 has better impact resistance and squeezing resistance capabilities under a same thickness condition. In addition, under a same performance condition, each support member and each elastic member of the elastic component 100 in this implementation are thin, and the plurality of support members and the plurality of elastic members are fastened to each other through an adhesive layer. In this way, when the electronic device 1000 is bent, adjacent support members and elastic members may move relative to each other, to greatly reduce a rebound force of the entire elastic component 100 during bending. In other words, when specific performance is ensured, the elastic component 100 in this implementation may be thinner. This helps implement a thin design of the electronic device 1000. In addition, in this implementation, a total thickness of the elastic portion of the elastic component 100 may be within a range of 0.2 millimeters to 0.4 millimeters, and a total thickness of the support portion may be less than or equal to the total thickness of the elastic portion. In this way, the elastic component 100 can have a low total thickness while having a good impact resistance capability and a good squeezing resistance capability. This helps implement a thin design of the electronic device 1000.

In addition, the elastic component 100 in this implementation includes the first support member 10, the first elastic member 20, the second support member 50, and the second elastic member 70, and the first support member 10, the first elastic member 20, the second support member 50, and the second elastic member 70 may be sequentially arranged in the direction from the hinge assembly 210 to the screen 300 in a stacked manner. In this way, in comparison with that the support member is disposed adjacent to the screen 300, and the screen 300 is prone to be damaged during bending because the support member has a large rebound force during bending, in this implementation, the elastic member (namely, the second elastic member 70 in this implementation) may be disposed adjacent to the screen 300, and the elastic member has a small rebound force during bending, to effectively reduce a probability of damaging the screen 300 during bending, and help prolong the service life of the electronic device 1000.

In addition, in this implementation, when the electronic device 1000 is in the unfolded state, at least a part of the elastic component 100 may be located in the first mounting groove 221. A sum of the thickness of the elastic component 100 and the thickness of the hinge assembly 210 may be equal to a height difference (namely, the first distance H1) between an upper surface of the first adhesive 240 of the housing apparatus 200 and a wall surface that is of the first mounting groove 221 and that faces the screen 300 in the thickness direction of the electronic device 1000. In this way, in one aspect, the elastic component 100 may use a thickness space of the housing apparatus 200, so that the elastic component 100 can ensure drop reliability of the screen 300 without increasing a thickness of the entire electronic device 1000, to help implement a thin design of the electronic device 1000. In another aspect, no height difference is generated between the elastic component 100 and the first adhesive 240 and the second adhesive 250 of the housing apparatus 200, so that a flat support environment can be provided for the screen 300, to improve a display effect of the screen 300 and enhance user experience.

In some implementations, the elastic component 100 may include the first support member 10, the first elastic member 20, the second support member 50, and the second elastic member 70, and the first elastic member 20, the first support member 10, the second elastic member 70, and the second support member 50 may be sequentially arranged in the direction from the hinge assembly 210 to the screen 300 in a stacked manner. In this way, in comparison with that the elastic member is disposed adjacent to the screen 300, and the screen 300 is prone to be damaged when the electronic device 1000 drops because the elastic member has a limited capability of dispersing and/or absorbing an impact force when the electronic device 1000 drops, in this implementation, the support member (namely, the second support member 50 in this implementation) may be disposed adjacent to the screen 300. When the electronic device 1000 drops, the support member can better absorb the impact force, and can provide good rigid support for the screen 300, to effectively reduce a probability of damaging the screen 300 when the electronic device 1000 drops, and help prolong the service life of the electronic device 1000.

In another implementation, the elastic component 100 may further include a third support member. The third support member may form a part of the support portion of the elastic component 100. The third support member may be fastened between the third adhesive 80 and the screen 300. Alternatively, the elastic component 100 may further include a third elastic member. The third elastic member may form a part of the elastic portion of the elastic component 100. The third elastic member may be fastened between the first support member 10 and the hinge assembly 210. Alternatively, the elastic component 100 may include both the third support member and the third elastic member. Both the third support member and the third elastic member may be fastened between the third adhesive 80 and the screen 300. In this case, the first support member 10, the first elastic member 20, the second support member 50, the second elastic member 70, the third support member, and the third elastic member may be sequentially arranged in the thickness direction of the electronic device 1000 in a stacked manner. A quantity of support members in the support portion of the elastic component 100 and a quantity of elastic members in the elastic portion are not specifically limited in this application.

In some other implementations, the elastic component 100 may alternatively not include the second support member 50, the second elastic member 70, the second adhesive 60, and the third adhesive 80. The first adhesive 40 may alternatively be directly connected to the first support member 10 and the screen 300.

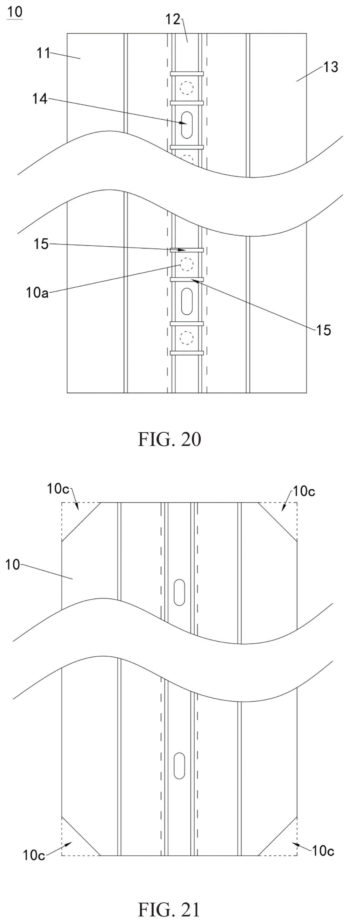

FIG. 20 is a diagram of a structure of the first support member 10 shown in FIG. 6 in another implementation.

As shown in FIG. 20, a structure of the first support member 10 in this implementation is approximately the same as the structure of the first support member 10 shown in FIG. 6. The same part is not described again. A difference lies in that the first support member 10 may be further provided with at least one fourth through hole 15. The fourth through hole 15 may be spaced from the welding spot 10a. In this implementation, there may be two fourth through holes 15. The welding spot 10a may be located between the two fourth through holes 15. One of the fourth through holes 15 may be located between the welding spot 10a and an adjacent second through hole 14. The fourth through hole 15 may be a long-bar-shaped hole 302a. An extension direction of the fourth through hole 15 may intersect with an extension direction of the first support member 10. For example, the extension direction of the fourth through hole 15 may be perpendicular to the extension direction of the first support member 10.

It may be understood that when the electronic device 1000 drops, the screen 300 slips under an action of inertia, and exerts a pulling force on the elastic component 100. When the pulling force is applied on the first support member 10, the welding spot 10a between the first support member 10 and the hinge assembly 210 is prone to be dewelded due to the pulling force from the screen 300. This affects contact between the first support member 10 and the main shaft portion 213 of the hinge assembly 210, causes radio frequency interference to an antenna in the electronic device 1000, and affects antenna performance of the entire electronic device 1000. In this implementation, the first support member 10 is provided with the fourth through hole 15 spaced from the welding spot 10a. In this way, the fourth through hole 15 can block the pulling force from being transferred to the welding spot 10a, to effectively avoid dewelding of the first support member 10. This helps ensure reliability of a connection between the first support member 10 and the hinge assembly 210, and reduce impact on antenna performance of the entire electronic device 1000.

FIG. 21 is a diagram of a structure of the first support member 10 shown in FIG. 6 in still another implementation.

As shown in FIG. 21, a structure of the first support member 10 in this implementation is approximately the same as the structure of the first support member 10 shown in FIG. 6. The same part is not described again. The following describes a difference between the two structures. For example, edge cutting may be performed on at least one corner of the first support member 10 to form at least one avoidance space 10c. The avoidance space 10c may be used to avoid the antenna in the electronic device 1000. In this implementation, the first support member 10 may be approximately in a long-bar shape, and has four corners. Edge cutting may be performed on each of the four corners to form four avoidance spaces 10c.

It may be understood that, in this implementation, the avoidance space 10c is formed by performing edge cutting on the corner of the first support member 10, so that the edge of the first support member 10 can be away from the antenna in the electronic device 1000. This can reduce radio frequency interference of the first support member 10 to the antenna in the electronic device 1000, and reduce impact of the first support member 10 on antenna performance of the entire electronic device 1000.

In some implementations, a shape and a size of the first elastic member 20 may be the same as those of the first support member 10. A shape and a size of the lubricating member 30 may also be the same as those of the first support member 10. In other words, edge cutting may be performed on each corner of the first elastic member 20 and the lubricating member 30. In this way, edge cutting can be performed on the first support member 10, the first elastic member 20, and the lubricating member 30 after the first support member 10, the first elastic member 20, and the lubricating member 30 are assembled. This helps reduce a preparation process and reduce a size discrepancy. In addition, the first support member 10, the first elastic member 20, and the lubricating member 30 have a same shape and a same size, to effectively avoid a step region between the first support member 10, the first elastic member 20, and the lubricating member 30, and help provide a flat support environment for the screen 300.

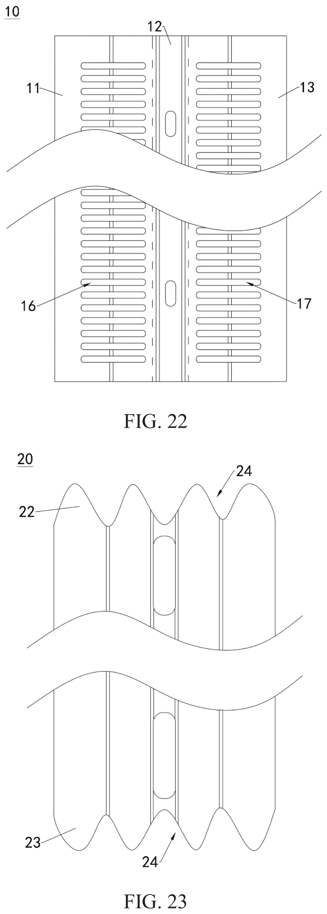

FIG. 22 is a diagram of a structure of the first support member 10 shown in FIG. 6 in yet another implementation.

As shown in FIG. 22, a structure of the first support member 10 in this implementation is approximately the same as the structure of the first support member 10 shown in FIG. 6. The same part is not described again. The following mainly describes a difference between the two structures. In this implementation, the first support member 10 may be further provided with a plurality of first holes 16 and a plurality of second holes 17. A quantity of first holes 16 may be the same as a quantity of second holes 17. The plurality of first holes 16 may all be located in the first portion 11 of the first support member 10. The plurality of first holes 16 may be spaced from each other in a length direction of the first support member 10. The plurality of second holes 17 may all be located in the third portion 13 of the first support member 10. The plurality of second holes 17 may be spaced from each other in the length extension direction of the first support member 10. Both the first hole 16 and the second hole 17 may be long-bar-shaped holes. Extension directions of the first holes 16 and the second holes 17 may intersect with the length extension direction of the first support member 10. In this implementation, the extension directions of the plurality of first holes 16 and the plurality of second holes 17 may be perpendicular to the length extension direction of the first support member 10.

It may be understood that, in this implementation, the first portion 11 of the first support member 10 is provided with the plurality of first holes 16 whose extension directions intersect with the length extension direction of the first support member 10, and the third portion 13 of the first support member 10 is provided with the plurality of second holes 17 whose extension directions intersect with the length extension direction of the first support member 10, so that a rebound force of the first support member 10 during bending can be effectively reduced, to help improve unfolding and folding experience of the electronic device 1000.

FIG. 23 is a diagram of a structure of the first elastic member 20 shown in FIG. 8 in another implementation.

As shown in FIG. 23, a structure of the first elastic member 20 in this implementation is approximately the same as the structure of the first elastic member 20 shown in FIG. 8. The same part is not described again. The following mainly describes a difference between the two structures. In this implementation, the first elastic member 20 may include a first end 22 and a second end 23 that are disposed opposite to each other. The first end 22 and the second end 23 each may be provided with a plurality of grooves 24. The first end 22 is used as an example. The plurality of grooves 24 may be spaced from each other. An opening of the groove 24 may be disposed opposite to the second end 23. In this case, the first end 22 may be approximately in a sawtooth shape or a wavy shape. The second end 23 is disposed in a same manner as the first end 22. Details are not described herein again.

It may be understood that, in this implementation, the first end 22 and the second end 23 of the first elastic member 20 are provided with one or more grooves 24, to provide a release space for bulges that occur at ends (namely, the first end 22 and the second end 23) of the first elastic member 20 when the electronic device 1000 drops in the unfolded state. This can effectively avoid a problem that the screen 300 fails due to broken routing of the screen 300 caused by a bulge on the screen 300 that occurs when the first elastic member 20 bulges at the edge of the end when the electronic device 1000 drops in the unfolded state, and helps prolong the service life of the screen 300 and enhance user experience.

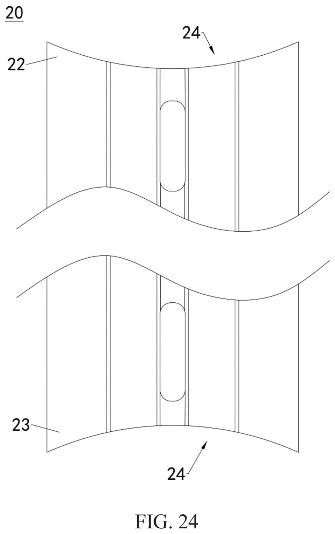

In another implementation, as shown in FIG. 24, the first end 22 may alternatively be provided with only one arc-shaped groove 24. In this case, the first end 22 may be approximately in an arc shape. Shapes and a quantity of the grooves 24 are not specifically limited in this application.

It should be noted that, features in implementations of this application may be combined with each other when there is no conflict, and any combination of features in different implementations also falls within the protection scope of this application. In other words, the plurality of implementations described above may alternatively be combined based on an actual requirement.

It should be noted that all the foregoing accompanying drawings are example figures of this application, and do not represent actual sizes of products. In addition, a size proportional relationship between components in the accompanying drawings is not intended to limit an actual product in this application.

The foregoing descriptions are merely some implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A foldable electronic device (1000), comprising a screen (300), a hinge assembly (210), a first housing (220), a second housing (230), and an elastic component (100), wherein the screen (300) is fastened to the first housing (220) and the second housing (230), the hinge assembly (210) comprises a first connection portion (211), a second connection portion (212), and a main shaft portion (213), the main shaft portion (213) is connected to the first connection portion (211) and the second connection portion (212), the first connection portion (211) is connected to the first housing (220), and the second connection portion (212) is connected to the second housing (230);
the elastic component (100) comprises an elastic portion and a support portion, a material of the elastic portion is an elastic material or a non-Newtonian fluid material, and a material of the support portion is a rigid material; and
the electronic device (1000) has an unfolded state and a folded state, and when the electronic device (1000) is in the unfolded state, the elastic component (100) is unfolded, the screen (300), the elastic component (100), and the hinge assembly (210) are stacked in a thickness direction of the electronic device (1000), the elastic portion and the support portion are stacked in the thickness direction of the electronic device (1000), a first portion of the elastic component (100) laps over the first connection portion (211), and a second portion of the elastic component (100) laps over the second connection portion (212), or
when the electronic device (1000) is in the folded state, the elastic component (100) is bent, a first portion of the elastic component (100) laps over the first connection portion (211), and a second portion of the elastic component (100) laps over the second connection portion (212).

2. The electronic device (1000) according to claim 1, wherein the support portion comprises a first support member (10), the elastic portion comprises a first elastic member (20), the first support member (10) is fastened to the main shaft portion (213) of the hinge assembly (210), and the first elastic member (20) is fastened to a surface that is of the first support member (10) and that faces away from the main shaft portion (213); and
the first support member (10) comprises a first portion (11), a second portion (12), and a third portion (13), the second portion (12) is connected between the first portion (11) and the third portion (13), the second portion (12) is fastened to the main shaft portion (213), and when the electronic device (1000) is in the unfolded state, the first portion (11) laps over the first connection portion (211) and is movable relative to the first connection portion (211), the second portion (12) and the first portion (11) are unfolded relative to each other, and the third portion (13) laps over the second connection portion (212) and is movable relative to the second connection portion (212).

3. The electronic device (1000) according to claim 2, wherein when the electronic device (1000) is in the folded state, the first portion (11) laps over the first connection portion (211), the second portion (12) is bent, and the third portion (13) laps over the second connection portion (212); and
when the electronic device (1000) is switched from the unfolded state to the folded state, the first portion (11) moves relative to the first connection portion (211), the second portion (12) bends relative to the first portion (11), and the third portion (13) moves relative to the second connection portion (212).

4. The electronic device (1000) according to claim 2 or 3, wherein the main shaft portion (213) has a flat surface (213a), the flat surface (213a) is disposed facing the screen (300), and the second portion (12) of the first support member (10) is fastened to the flat surface (213a); and
when the electronic device (1000) is in the unfolded state, the flat surface (213a) is parallel to the screen (300).

5. The electronic device (1000) according to any one of claims 2 to 4, wherein a thickness of the first support member (10) is less than or equal to a thickness of the first elastic member (20).

6. The electronic device (1000) according to any one of claims 2 to 5, wherein the first elastic member (20) is provided with at least one first through hole (21), the first through hole (21) exposes a part of the first support member (10), the elastic component (100) further comprises at least one first adhesive (40), and the first adhesive (40) is located in the first through hole (21) and is connected to the first support member (10) and the screen (300).

7. The electronic device (1000) according to claim 6, wherein the first support member (10) is provided with at least one second through hole (14), the second through hole (14) exposes a part of the main shaft portion (213), the second through hole (14) communicates with the first through hole (21), an opening size of the second through hole (14) is not greater than an opening size of the first through hole (21), and when the electronic device (1000) is in the unfolded state, the first through hole (21) at least partially overlaps the second through hole (14) in the thickness direction of the electronic device (1000); and
the first adhesive (40) is located in the second through hole (14) and the first through hole (21) and is connected to the part of the main shaft portion (213), the part of the first support member (10), and a part of the screen (300).

8. The electronic device (1000) according to any one of claims 3 to 7, wherein the support portion further comprises a second support member (50), and when the electronic device (1000) is in the unfolded state, the second support member (50) is stacked between the first elastic member (20) and the screen (300) in the thickness direction of the electronic device (1000).

9. The electronic device (1000) according to claim 8, wherein when the electronic device (1000) is in the unfolded state, a width of a gap between the first connection portion (211) and the second connection portion (212) in the first direction is greater than or equal to a width of the second support member (50) in the first direction.

10. The electronic device (1000) according to claim 8 or 9, wherein the elastic component (100) further comprises a second adhesive (60), the second adhesive (60) is connected to the second support member (50) and the screen (300), and when the electronic device (1000) is in the unfolded state, the second adhesive (60) is stacked between the second support member (50) and the screen (300) in the thickness direction of the electronic device (1000); and
when the electronic device (1000) is in the unfolded state, a direction from the first housing (220) to the second housing (230) is the first direction, and a width of the second adhesive (60) is less than or equal to the width of the second support member (50) in the first direction.

11. The electronic device (1000) according to any one of claims 8 to 10, wherein the elastic portion further comprises a second elastic member (70), and the second elastic member (70) is fastened between the second support member (50) and the screen (300); and
the first support member (10), the first elastic member (20), the second support member (50), and the second elastic member (70) are sequentially arranged in a direction from the hinge assembly (210) to the screen (300).

12. The electronic device (1000) according to claim 1 or 2, wherein the support portion comprises the first support member (10) and a second support member (50), the elastic portion comprises the first elastic member (20) and a second elastic member (70), and the first elastic member (20), the first support member (10), the second elastic member (70), and the second support member (50) are sequentially arranged in a direction from the hinge assembly (210) to the screen (300).

13. The electronic device (1000) according to claim 11, wherein the elastic component (100) further comprises a third adhesive (80), the third adhesive (80) is connected between the second elastic member (70) and the screen (300), and when the electronic device (1000) is in the unfolded state, a width of the third adhesive (80) is equal to a width of the second elastic member (70) in the first direction.

14. The electronic device (1000) according to claim 11 or 13, wherein the screen (300) comprises a first portion (310), a second portion (320), and a third portion (330), the first portion (310) is connected to the first housing (220), the third portion (330) is connected to the second housing (230), and the second portion (320) is connected between the first portion (310) and the third portion (330); and
when the electronic device (1000) is in the unfolded state, the screen (300) is unfolded, the first portion (310), the second portion (320), and the third portion (330) are sequentially arranged in the first direction, the second portion (320) and the hinge assembly (210) are stacked in the thickness direction of the electronic device (1000), and the width of the second elastic member (70) in the first direction is greater than or equal to a width of the second portion (320) in the first direction; or
when the electronic device (1000) is in the folded state, the first portion (310) and the third portion (330) are folded relative to each other, and the second portion (320) is bent.

15. The electronic device (1000) according to any one of claims 3 to 14, wherein the elastic component (100) further comprises a lubricating member (30), and the lubricating member (30) is fastened to a surface that is of the first elastic member (20) and that faces away from the first support member (10).

16. The electronic device (1000) according to claim 15, wherein the lubricating member (30) comprises a main body portion (31), a first bending portion (32), and a second bending portion (33), the main body portion (31) is connected to the first bending portion (32) and the second bending portion (33), the first bending portion (32) comprises a first connection portion (321) and a first extension portion (322), and the second bending portion (33) comprises a second connection portion (331) and a second extension portion (332);
when the electronic device (1000) is in the unfolded state, the first extension portion (322) and the main body portion (31) are spaced from each other in the thickness direction of the electronic device (1000), the second extension portion (332) and the main body portion (31) are spaced from each other in the thickness direction of the electronic device (1000), the first extension portion (322) and the second extension portion (332) are located on a side that is of the main body portion (31) and that faces the hinge assembly (210), the first extension portion (322) and the second extension portion (332) are spaced from each other, the first connection portion (321) is connected to the main body portion (31) and the first extension portion (322), and the second connection portion (331) is connected to the main body portion (31) and the second extension portion (332); and
the main body portion (31), the first connection portion (321), and the first extension portion (322) form a first semi-enclosed accommodation space (32a), the main body portion (31), the second connection portion (331), and the second extension portion (332) form a second semi-enclosed accommodation space (33a), a part of the first elastic member (20) and at least a part of the first portion (11) of the first support member (10) are located in the first semi-enclosed accommodation space (32a), and a part of the first elastic member (20) and at least a part of the third portion (13) of the first support member (10) are located in the second semi-enclosed accommodation space (33a).

17. The electronic device (1000) according to claim 16, wherein when the electronic device (1000) is in the unfolded state, the main body portion (31), the first elastic member (20), the first portion (11) of the first support member (10), and the first extension portion (322) are sequentially stacked in the thickness direction of the electronic device (1000), the first connection portion (321) is disposed on a side surface that is of the first portion (11) of the first support member (10) and that is away from the third portion (13) of the first support member (10), the main body portion (31), the first elastic member (20), the third portion (13) of the first support member (10), and the second extension portion (332) are sequentially stacked, and the second connection portion (331) is disposed on a side surface that is of the third portion (13) of the first support member (10) and that is away from the first portion (11) of the first support member (10).

18. The electronic device (1000) according to any one of claims 3 to 17, wherein the first elastic member (20) comprises a first end (22) and a second end (23) that are disposed opposite to each other in a length extension direction, the first end (22) is provided with at least one groove (24), and an opening direction of the groove (24) is a direction from the second end (23) to the first end (22).

19. The electronic device (1000) according to any one of claims 3 to 18, wherein the first portion (11) of the first support member (10) is provided with a plurality of first holes (16), the plurality of first holes (16) are spaced from each other in a length extension direction of the first support member (10), the third portion (13) of the first support member (10) is provided with a plurality of second holes (17), and the plurality of second holes (17) are spaced from each other in the length extension direction of the first support member (10); and
a length extension direction of the first hole (16) and a length extension direction of the second hole (17) both intersect with the length extension direction of the first support member (10).

20. The electronic device (1000) according to any one of claims 3 to 19, wherein the first support member (10) is in a long-bar shape, and at least one corner of the first support member (10) has an avoidance space (10c).

21. The electronic device (1000) according to any one of claims 1 to 20, wherein a thickness of the support portion is less than or equal to a thickness of the elastic portion.

22. The electronic device (1000) according to any one of claims 1 to 21, wherein the hinge assembly (210) is located on an inner side of the screen (300).

23. The electronic device (1000) according to any one of claims 1 to 22, wherein the first housing (220) comprises a first mounting groove (221), and the second housing (230) comprises a second mounting groove (231);
when the electronic device (1000) is in the unfolded state, the first mounting groove (221) and the second mounting groove (231) form an accommodation space (200a); and
at least a part of the hinge assembly (210) and at least a part of the elastic component (100) are located in the accommodation space (200a).

24. A screen assembly (400), comprising a screen (300) and at least one elastic member, wherein the screen (300) comprises a first portion (310), a second portion (320), and a third portion (330), the second portion (320) is connected between the first portion (310) and the third portion (330), the elastic member is located on a non-display side of the screen (300), a part of the elastic member is fastened to the second portion (320), and a material of the elastic member is an elastic material or a non-Newtonian fluid material; and
a width of the elastic member in a first direction is less than a width of the screen (300) in the first direction, and the first direction is a direction from the first portion (310) to the second portion (320) when the screen assembly (400) is in an unfolded state.

25. The screen assembly (400) according to claim 24, wherein the width of the elastic member in the first direction is greater than or equal to a width of the bending portion (320) in the first direction.

26. The screen assembly (400) according to claim 24 or 25, wherein the screen assembly (400) further comprises at least one support member, the support member is fastened to a surface that is of the elastic member and that faces away from the screen (300), and a material of the support member is a rigid material; and
a width of the support member in the first direction is less than or equal to the width of the elastic member in the first direction.

27. The screen assembly (400) according to claim 26, wherein a thickness of the support member is less than or equal to a thickness of the elastic member.
